# EUROPEAN PATENT SPECIFICATION

(11) **EP 3 010 333 B1**
(45) Date of publication and mention of the grant of the patent: **22.01.2020**
(21) Application number: 14854865.4
(22) Date of filing: 19.06.2014
(51) Int. Cl.: A01K 5/02, G06Q 50/02, B65G 15/42, A01K 5/01

(54) **NETWORKED AUTOMATIC ANIMAL FEEDING SYSTEM**
AUTOMATISCHE VERNETZTE TIERFUTTERANLAGE
SYSTÈME D'ALIMENTATION AUTOMATIQUE POUR ANIMAUX EN RÉSEAU

(30) Priority: 19.06.2013 US 201361836711 P; 18.06.2014 US 201414308613; 18.06.2014 US 201414308191
(43) Date of publication of application: 27.04.2016
(73) Proprietor: Radio Systems Corporation, Knoxville, TN 37932 (US)
(72) Inventor: CORNWELL, Jonathan L., Powell, TN 37849 (US); SAYERS, Michael K., Kodak, TN 37764 (US); ELMORE, Larry C., Knoxville, TN 37922 (US); POISSON, Melissa, Knoxville, TN 37934 (US)
(74) Representative: Docherty, Andrew John
(86) International application number: PCT/US2014/043059
(87) International publication number: WO 2015/057278

(56) References cited:
- GB-A- 2 454 658
- JP-U- H0 736 686
- KR-A- 20110 115 696
- US-A- 4 782 790
- US-A1- 2010 132 629
- US-A1- 2011 139 076
- US-A1- 2011 297 090
- US-A1- 2013 013 104
- US-B1- 6 401 657
- US-B1- 8 100 084

## Description

### BACKGROUND OF THE INVENTION

This section is intended to introduce various aspects of the art, which may be associated with exemplary embodiments of the present disclosure. This discussion is believed to assist in providing a framework to facilitate a better understanding of particular aspects of the present disclosure. Accordingly, it should be understood that this section should be read in this light, and not necessarily as admissions of prior art.

### Field of the Invention

The present inventive concept relates to the field of animal feeding devices. More particularly, the invention relates to animal feeding devices wherein the dispensing of food for the pet may be programmed. The invention further relates to pet feeding devices wherein the dispensing of food may be timed and controlled remotely.

### Technology in the Field of the Invention

Many animal owners have a need to feed their animals on an automated basis. The need typically arises when the owner is absent and is unable to feed a pet at the appropriate times due to work obligations or travel. In other instances, the owner has a physical limitation that inhibits them from periodically filling a food bowl. In these instances, an automatic pet food dispenser can provide food to the pet over time.

Pet feeders have been developed that incrementally deliver dry food to an animal through the force of gravity. One example is U.S. Pat. No. 6,467,428, entitled "Filtered Water and Feeding System for Pets." The '428 patent discloses a system that includes both a gravity watering unit (for dispensing filtered water) and a gravity feeding unit (for dispensing pet food). Each unit resides over a dispensing bowl. The bowl receives and supports the respective dispensing unit such that the stored water or food passes through the opening, under the force of gravity, and into the corresponding bowl. The bowl presents the food or water such that it is accessible to an animal. As the animal consumes the food or water from the bowl, gravity forces more food or water through the opening and into the bowl.

An improved gravitational feeding device was disclosed in U.S. Pat. No. 8,387,566 entitled "Gravity-Induced Automatic Animal Watering / Feeding Device." The device includes a reservoir that houses food, and a base member that supports the reservoir. The device further includes a receptacle received by the base member to receive the food when it passes from the reservoir. A reservoir cap is also provided. The reservoir cap is removably secured to a reservoir opening and includes a valve disposed at the water outlet. The valve is movable between a first position that allows food or water to flow from the reservoir to the receptacle by way of an outlet when the reservoir is supported by the base member, and a second position that prevents the food or water from flowing from the reservoir when the reservoir is removed from the base member. Thus, the device minimizes the amount of food or water that is spilled when the reservoir is being refilled.

Of interest, the receptacle is removable from the bowl for easy cleaning. This promotes sanitation. In addition, the reservoir is secured to the bowl through a twist-and-lock arrangement, which further prevents spilling in the event the device is overturned.

U.S. Patent No. 6,401,657 is entitled "Automatic Pet Food Feeder." This patent teaches a motorized feeder. The feeder has a vertically-positioned "storage bin" having an open bottom. The storage bin generally sits above but offset from a bowl. The feeder also has "a motor mounted to the housing and having a rotatable shaft," and "an auger ... mounted to the rotatable shaft of the motor." The auger resides within an elongated tube. Actuation of the motor by a timing device or a sensing device causes the auger to turn, which in turn drives food horizontally along the tube and into the bowl. Thus, the feeder provides for horizontal drive-screw feeding.

As noted, a timer may be used to control a motor which drives a screw feeder, such as the feeder of the '657 patent. In this way, food is dispensed in limited quantities at different times. In another example, the pet feeder has either a rotatable cover or a rotatable bowl. Relative rotation exposes different parts of the bowl to the pet as rotation takes place. An example of such a product is the PetSafe® Automatic Feeder provided by Radio Systems Corporation of Knoxville, Tennessee. Covering portions of the bowl prevents the pet, such as a puppy, from over-eating or from eating all of the food in the bowl in one or two feedings. Further, the timer ensures that the pet will have food at a certain time even though the owner may be absent. In some instances, access to food is denied after a certain period of time through relative rotation of the cover and a compartment of the bowl.

Another feeder available on the market is the PetMate InfinityTM Pet Feeder. "PetMate" is a trade name of Doskocil Manufacturing Company, Inc. from Arlington, Texas. This feeder uses either a mechanical auger or a paddle wheel system to agitate food from a pet storage container, and dispense food in a dish in limited quantities. This ensures portion control. Further, some of the PetMateTM products are programmable in terms of timing for dispensing food.

US2010/0132629 discloses a method and system that controls pet access to various different locations and/or objects. In a preferred embodiment, the disclosure provides an automated system whereby pets wearing an ID tag are allowed access to various locations and/or objects, such as food contained within a feeder dish for example, while a sensor system, responding to the presence of other animals or people, causes the device to close preventing unauthorised access thereto. The feeder further includes one or more sensors using ultrasonic, infrared technology or both in combination, for the identification of both tagged and non-tagged animals or children.

Despite these products and their benefits, any of the gravitational, auger-driven or paddle-wheel systems can be inconsistent in terms of how much food is dispensed. It is noted that dry pet food frequently isn't really that dry. In many instances, pet food includes kibbles that are moist and, thus, can stick together or come out in small clumps. This can cause the pet food dispenser to jam. In some instances, moist kibble pieces can stick to mechanical parts of a dispenser. As the Archimedes' screw or the paddle wheel attempts to shear food and move it forward, the feeding device can again become jammed. At a minimum, the shearing action leads to increased stress on components.

Another design short coming in some incremental pet feeders is that the clever pet, with their paw, can reach up into the opening from where the food is dispensed and cause more food to fall out. Therefore, an automatic food dispenser offering controlled feeding wherein the pet cannot reach in and remove food itself is needed. Further, a food dispenser offering programming and remote control with a reduced likelihood of jamming is needed.

### BRIEF SUMMARY OF THE INVENTION

The invention relates to an animal feeding system as defined in claim 1 and a method of delivery food to an animal according to claim 8.
An animal feeding system is provided herein. In one embodiment, the animal feeding system first includes a housing. The housing serves to at least partially conceal certain mechanized components of the system.

The animal feeding system also includes a container. The container is dimensioned to hold dry pet food in pellet form. The container has an upper end and a lower end. The upper end may include a lid for receiving and then covering pet food. The lower end has an opening through which the pet food gravitationally travels. Preferably, the lower end is frusto-conical in shape, or is otherwise angled to facilitate gravitational movement of the pet food. Preferably, the container rests over and is at least partially supported by the housing.

The system also includes a receptacle. The receptacle is dimensioned and positioned to receive the dry pet food as it gravitationally falls through the opening in the container. The receptacle has an open top for receiving the food. Preferably, the receptacle is integral to the housing for the animal feeding system.

The system also provides a conveyor system. The conveyor system moves the dry pet food as it is received by the receptacle. The conveyor system includes a conveyor belt. The conveyor belt may be fabricated from rubber, plastic or other flexible material. The conveyor belt has a plurality of raised ribs that are spaced apart along the belt. The ribs form compartments for holding designated volumes of the dry pet food. Of interest, the conveyor belt is angled upward at least 15 degrees, and preferably at least 30 degrees, relative to horizontal to reduce the risk of jamming.

The conveyor system also includes a drive motor. The drive motor causes cycling of the conveyor. In one aspect, the drive motor is an electric motor that rotates a drive shaft. The drive shaft, in turn, imparts rotational movement to the conveyor. As the conveyor moves according to a designated cycle, it picks up food from the receptacle.

The conveyor system resides within the housing. The housing will have walls that generally enclose the conveyor system and its mechanized components. The wall (or walls) also serve to retain the dry pet food along the conveyor belt and within the housing as the conveyor belt cycles, thereby also forming the compartments.

The animal feeding system further comprises a feeding bowl. The bowl defines an opening for receiving the dry pet food from the conveyor belt. In one aspect, the bowl is integral to and is supported by the housing. Alternatively, the bowl is a conventional bowl that is just placed below an outlet in the housing at the end of the conveyor belt. In this way, the bowl may be easily cleaned or replaced.

Additionally, the animal feeding system includes a processor. The processor is in electrical communication with the motor. The processor is configured to deliver start and stop signals to the motor in response to wireless signals sent from a control unit.

The animal feeding system additionally comprises the user control unit. The control unit offers a user interface for programming the system according to a desired feeding schedule. In one aspect, the user control unit is integral to the housing and provides a user with an LCD panel for programming feeding. In another aspect, the user control unit is a remote control having a transmitter or a transceiver for sending wireless control signals to the processor. In this instance, the remote control may be a dedicated remote control unit, a personal digital assistant, or a general purpose computer that interfaces through a website.

In any of the above aspects, the user may select from any of the following feeding methods:
(a) portion control feeding, wherein a designated amount of food is dispensed into the feeding bowl one or more times per day, such designated amount being less than a full volume of the feeding bowl;
(b) slow-feeding, wherein a designated amount of food is dispensed into the feeding bowl one or more times per day, but with the conveyor belt cycling at a substantially reduced rate;
(c) free choice feeding, wherein a set portion of food is always available to the pet to eat from whenever they desire;
(d) timed feeding, wherein a set portion of food is available to the pet for a certain period of time, and then removed at the end of that set period of time;
(e) treat dispenser feeding, wherein a solid pet treat is dispensed automatically according to a timer, or immediately in response to a signal sent by the user through the remote control unit; and
(f) selective access feeding, wherein the animal feeding system is able to distinguish between two or more pets such that a selected pet is unable to access a feeding bowl at certain times.

A method of delivering dry pet food to an animal is also disclosed herein. The method generally includes providing a bowl. The bowl defines a wall and an interior basin for holding a dry, pelletized pet food. The method also includes filling a container with the pet food. The food in the container is positioned to gravitationally fall into a receptacle below the container. The method also includes programming an animal feeding system that periodically activates a conveyor belt for transporting the dry pet food from the receptacle and into the bowl.

### BRIEF DESCRIPTION OF THE DRAWINGS

So that the manner in which the present inventions can be better understood, certain illustrations, charts and/or flow charts are appended hereto. It is to be noted, however, that the drawings illustrate only selected embodiments of the inventions and are therefore not to be considered limiting of scope, for the inventions may admit to other equally effective embodiments and applications.
Figure 1A is a perspective view of an animal feeding system of the present invention, in one embodiment. The feeding system includes a container for holding dry pet food, and a processor for controlling how food is dispensed into a bowl in response to programming.
Figure 1B is another perspective view of the animal feeding system of Figure 1A, but showing certain components in exploded-apart relation. These components include, for example, the container, a housing and the bowl.
Figure 1C is another perspective view of the animal feeding system of Figure 1A in a modified embodiment. Here, the housing has been removed to expose a conveyor system and a drive motor. The system includes a micro-processor that is in electrical communication with a separate user control.
Figure 1D is an enlarged view of a micro-processor from the animal feeding system of Figure 1C. The micro-processor is in wireless electrical communication with a separate remote control in the form of a portable digital assistant.
Figures 2A through 2D provide views of components of a conveyor system to be used in the animal feeding system of Figure 1A. The conveyor system includes a compartmentalized conveyor belt.

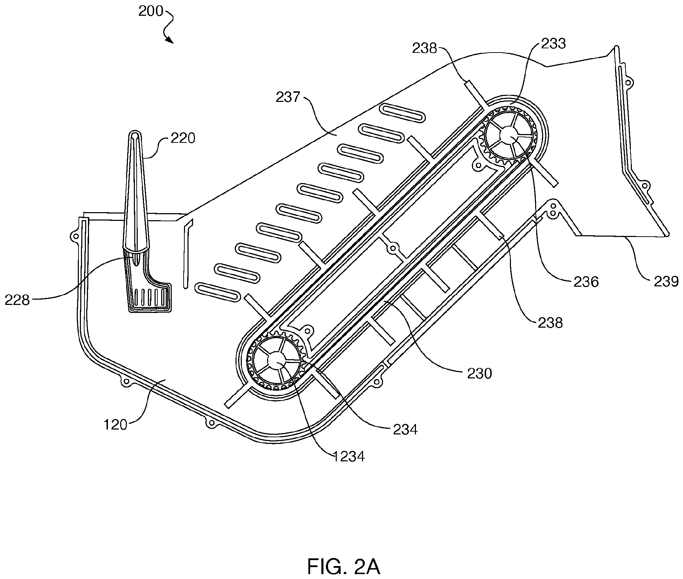

Figure 2A is a side view of the conveyor system, with a side wall removed to expose the conveyor belt. A pair of pulleys is seen used for supporting and for turning the conveyor. A mechanical agitator is also visible.

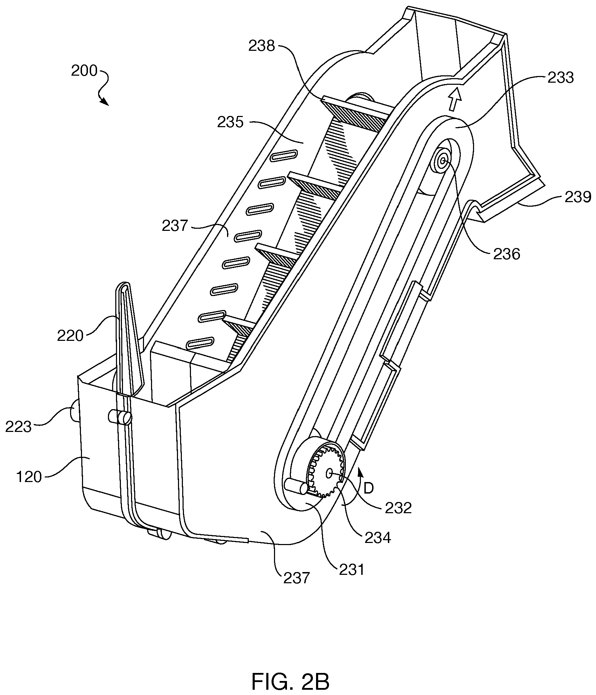

Figure 2B is a perspective view of the conveyor system of Figure 2A, with both side walls intact. The conveyor belt includes a series of compartments for holding defined volumes of dry pet food.

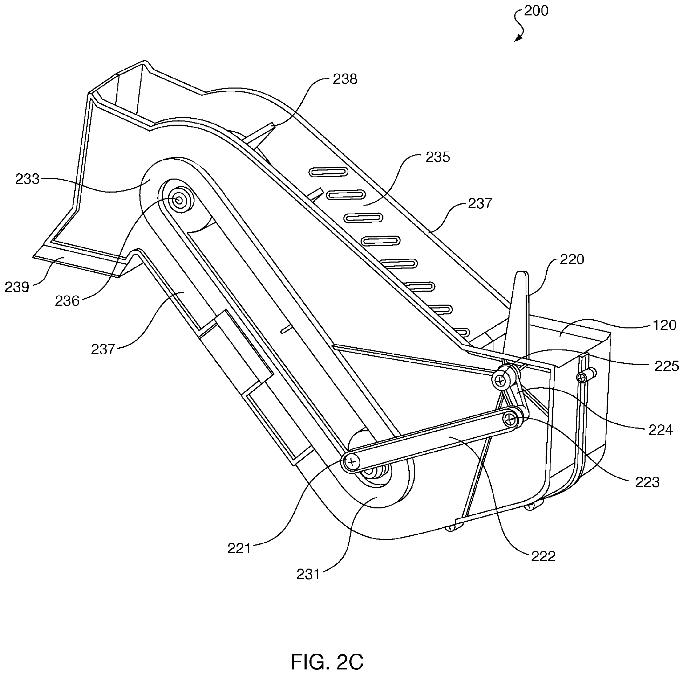

Figure 2C is another perspective view of the conveyor system of Figure 2B, but shown from a side opposite that of Figure 2A. No food is in the compartments of the conveyor belt.

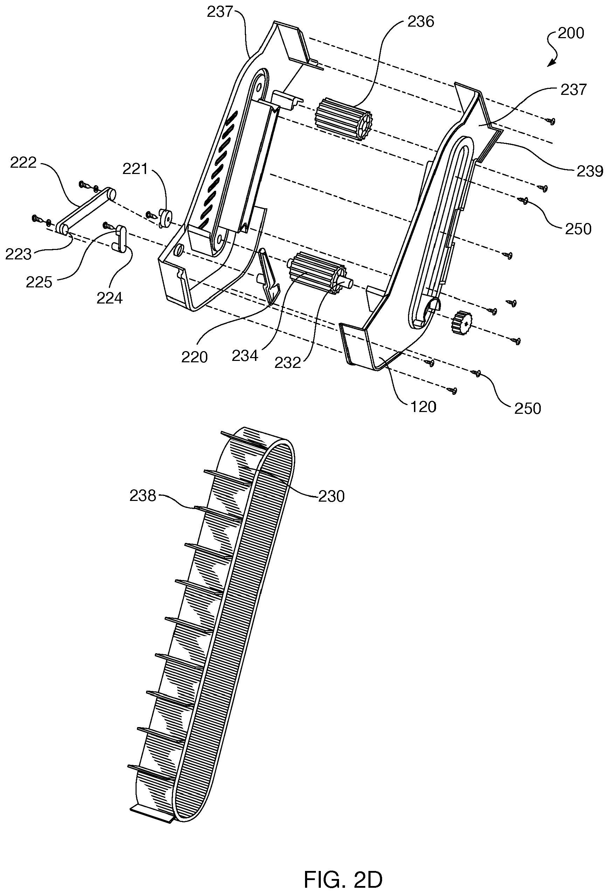

Figure 2D is still another perspective view of the conveyor system of Figure 2B, but with components shown in exploded-apart relation.

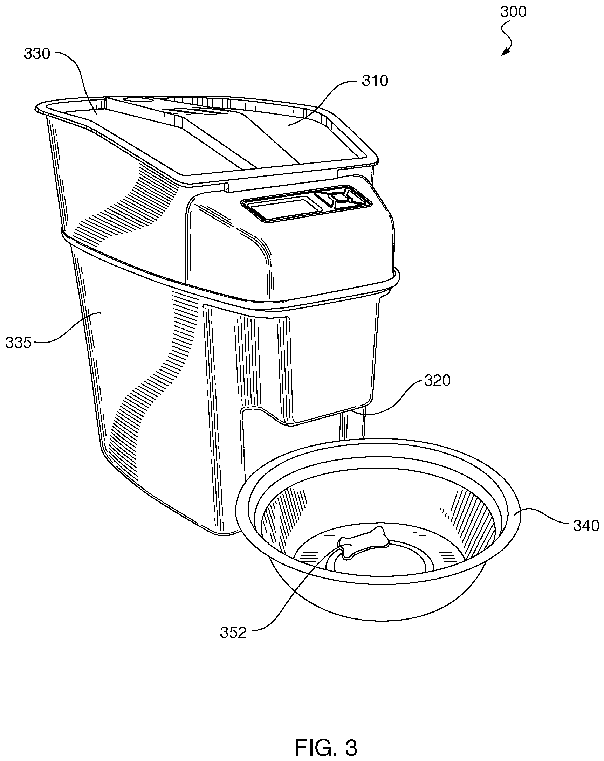

Figure 3 is a perspective view of an animal feeding system. In this arrangement, separate compartments are provided for dry pet food and for pet treats.

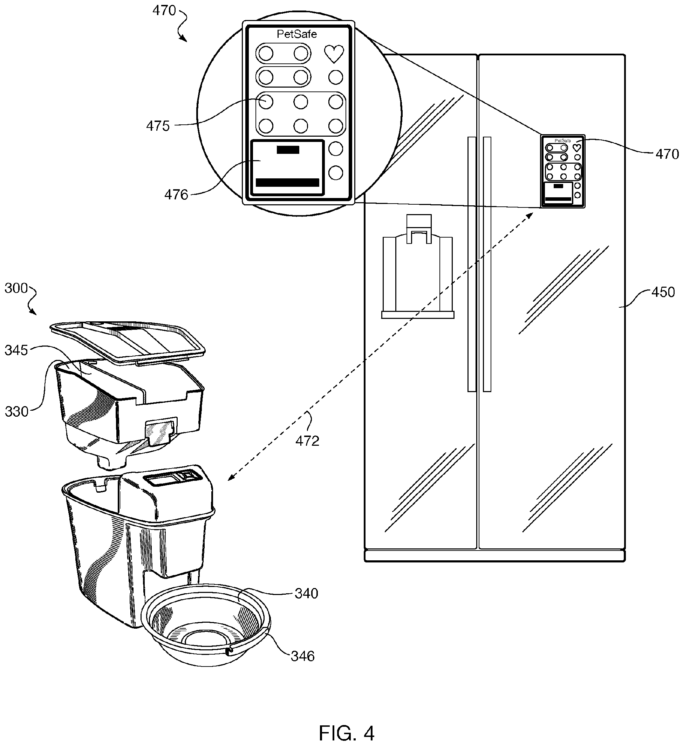

Figure 4 illustrates the animal feeding system of Figure 3 in operative relation to a remotely located user control unit. The control unit is configured to magnetically and removably reside on the door of a refrigerator, and is used for controlling or programming the animal feeding system, in one embodiment. Certain components of the feeding system are shown in exploded-apart relation.

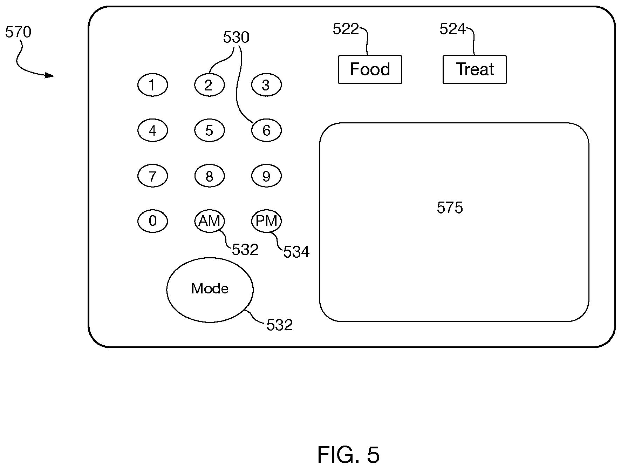

Figure 5 is an enlarged plan view of a control panel designed to reside on the housing of the animal feeding system, in one embodiment. In this arrangement, the control panel serves as a user control unit.

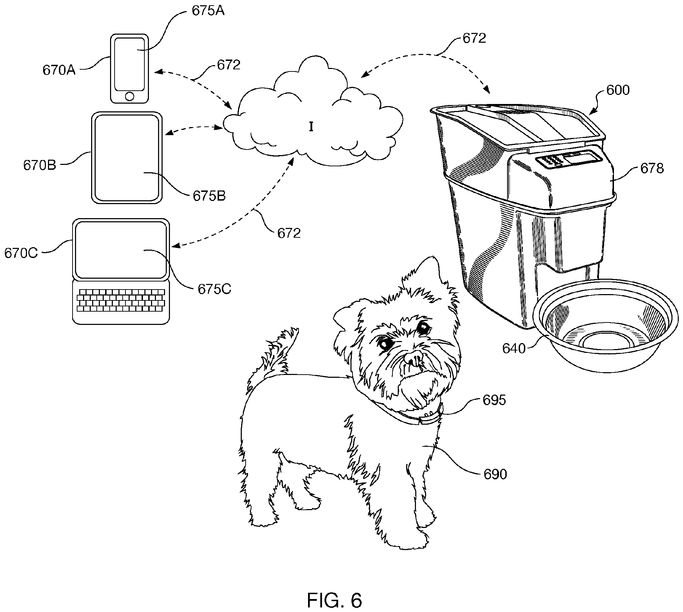

Figure 6 is perspective view of an animal feeding system in electrical communication with alternative user control units. Here, the control units are remote control units.

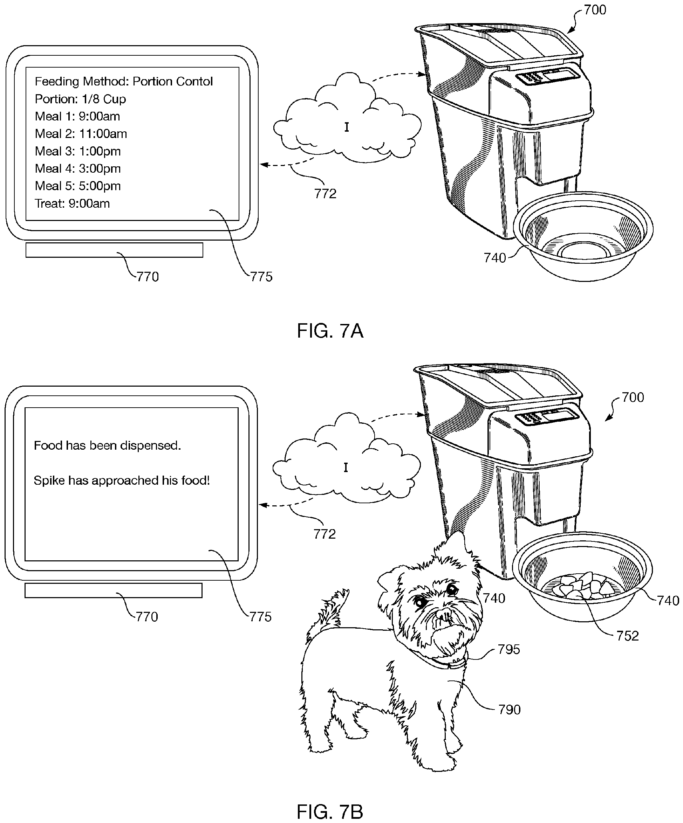

Figures 7A and 7B present schematic views of a conveyor-operated animal feeding system in wireless electrical communication with a remote user control unit. A display of the control unit is shown.
In Figure 7A, a feeding schedule is shown on the display. In Figure 7B, a real time status report concerning feeding is shown on the display.

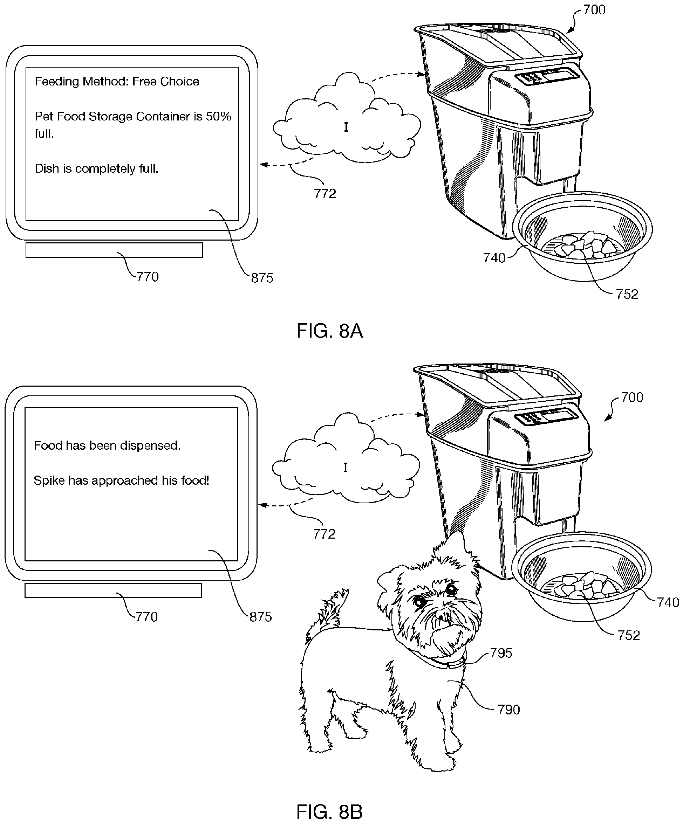

Figures 8A and 8B present additional schematic views of a conveyor-operated animal feeding system in wireless electrical communication with a remote user control unit. A display of the control unit is again shown.
In Figure 8A, a real time status report concerning feeding is shown on the display, indicating the feeding bowl as full. In Figure 8B, a real time status report concerning feeding is shown on the display, indicating that a pet has approached the feeding bowl.

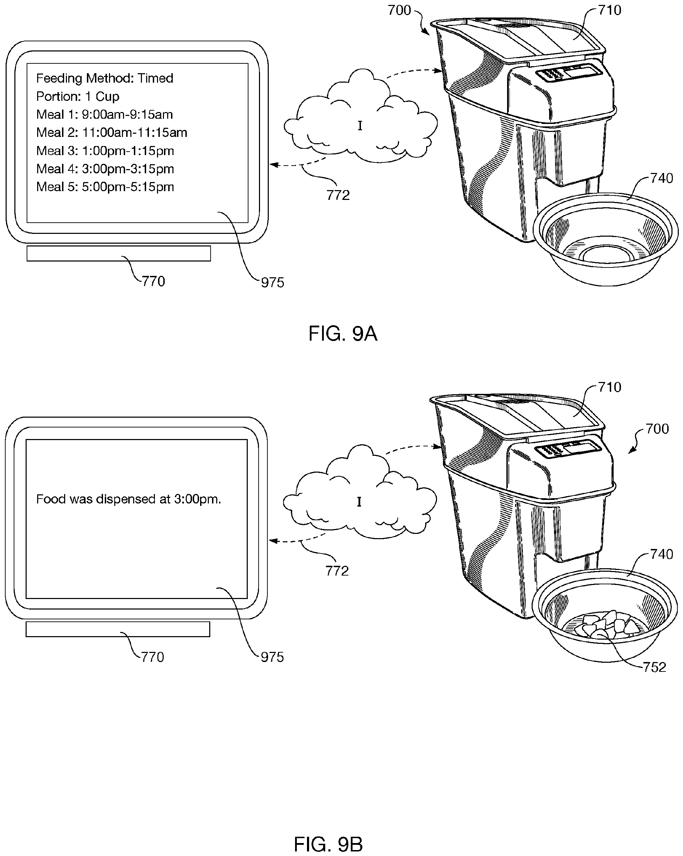

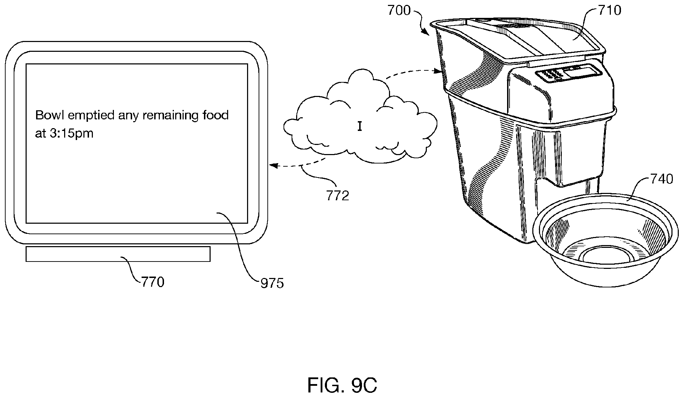

Figures 9A, 9B and 9C present additional schematic views of a conveyor-operated animal feeding system in wireless electrical communication with a remote user control unit. A display of the control unit is again shown.
In Figure 9A, a new feeding schedule is shown on the display, showing a timed feeding. In Figure 9B, a real time status report concerning feeding is shown on the display, indicating that food has been dispensed. In Figure 9C, a real time status report concerning feeding is shown on the display, indicating that the feeding bowl has been emptied.

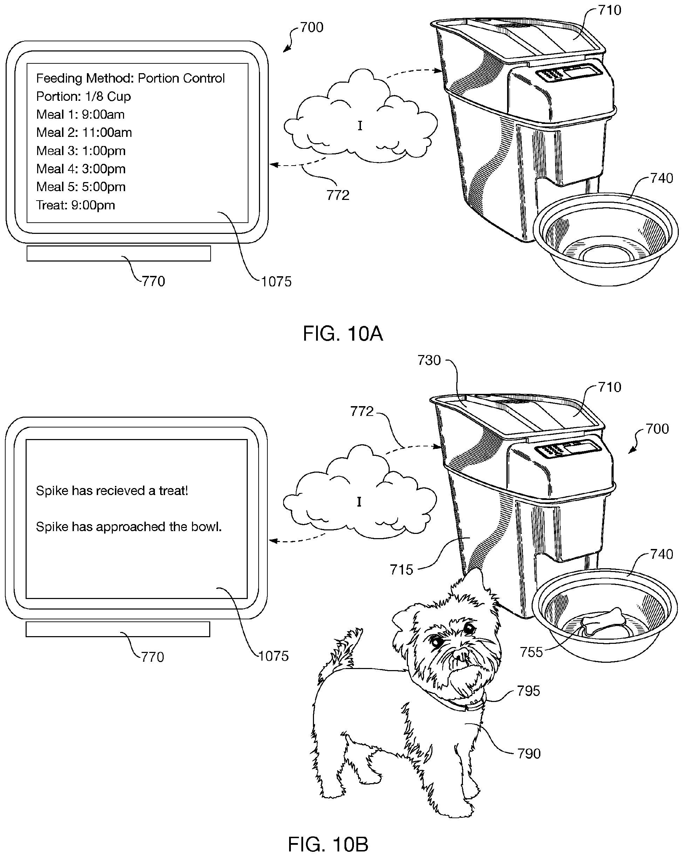

Figures 10A and 10B present additional schematic views of a conveyor-operated animal feeding system in wireless electrical communication with a remote user control unit. A display of the control unit is again shown.
In Figure 10A, a new feeding schedule is shown. In Figure 10B, a real time status report concerning feeding is shown, indicating that the pet has received a treat.

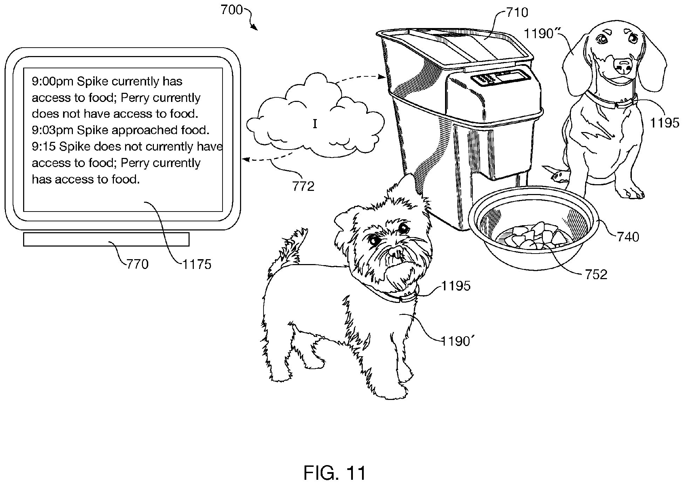

Figure 11 is a schematic view showing a user control unit in wireless communication with a conveyor-operated animal feeding device. Here, a real time status report of feeding activity is provided on a display.

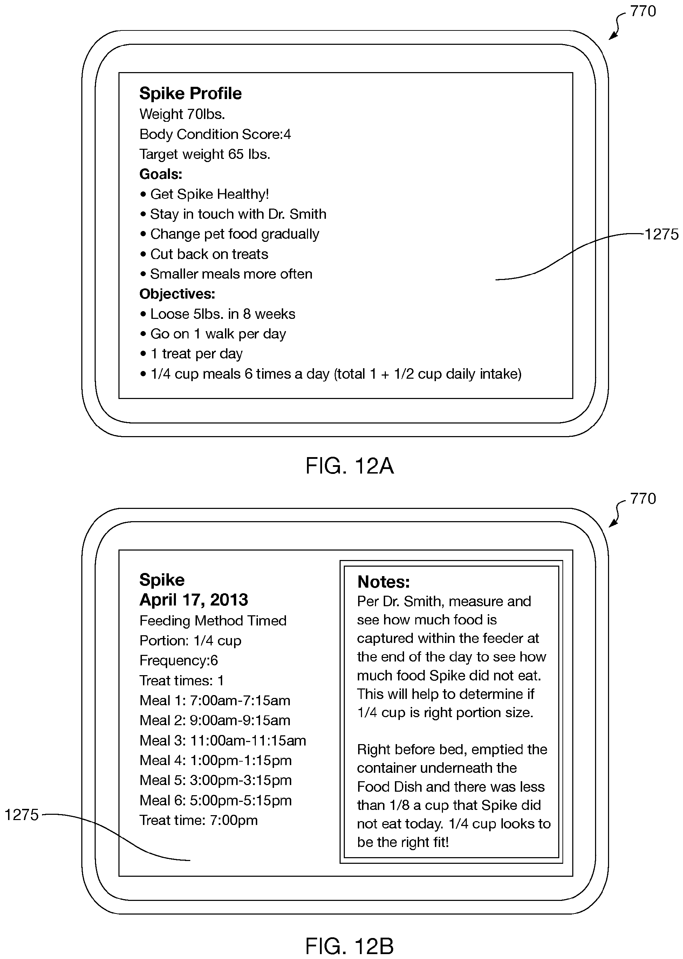

Figure 12A presents an illustrative display from the user control unit of Figure 11, showing health status and goals for a pet.
Figure 12B presents another illustrative display from the control unit of Figure 11, showing a feeding schedule and user notes.

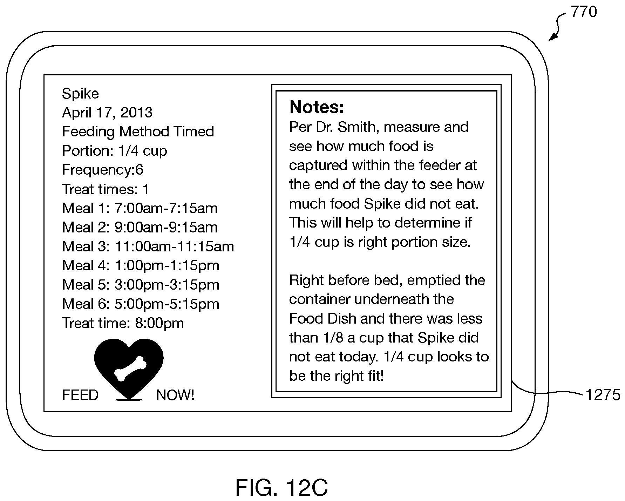

Figure 12C presents still another view of the display from the control unit of Figure 11. An emotional feed button is shown, ready to dispense a treat.

### DETAILED DESCRIPTION OF CERTAIN EMBODIMENTS

### Definitions

For purposes of the present disclosure, it is noted that spatially relative terms, such as "up," "down," "right," "left," "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over or rotated, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

As used herein, the term "pellet" means a substantially dry, granular piece of food, of any shape, that may be consumed by a canine or feline or other similar household pet. The term "pellet" includes semi-moist kibbles.

### Description of Selected Specific Embodiments

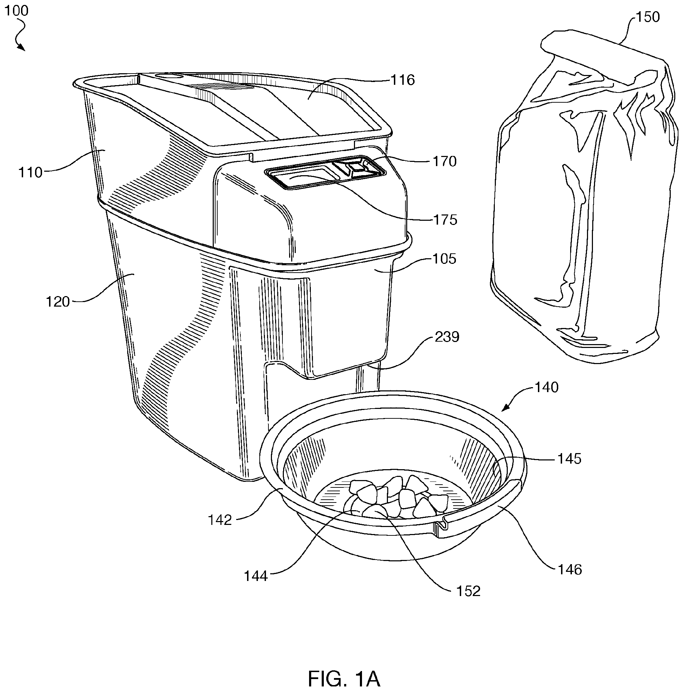

**Figure 1A** is a perspective view of an animal feeding system **100** of the present invention, in one embodiment. The feeding system **100** is shown as an integral unit. The feeding system **100** generally includes a container **110** for holding dry pet food, and a housing **105** for holding internal components.

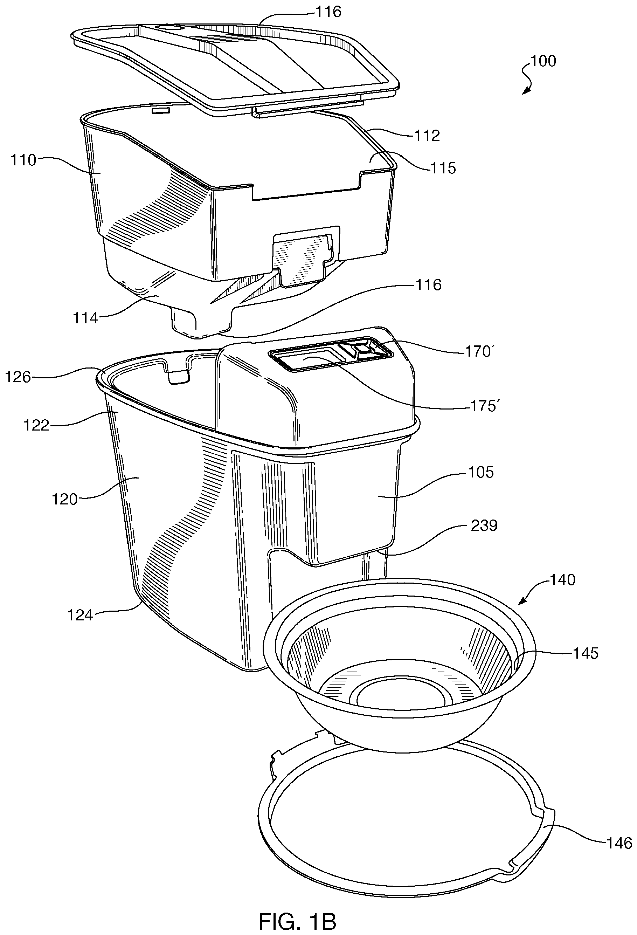

The container **110** removably resides on top of the housing **105.** The container **110** may be a transparent or translucent body having a substantially hollow interior. (The interior is shown at **115** in **Figure 1B****.)** The interior **115** is dimensioned to receive and hold a dry, pelletized pet food. Preferably, the container **110** is fabricated from a lightweight material such as a polycarbonate. Ideally, the container **110** is at least partially supported by the housing **105.**

**Figure 1A** also shows an illustrative bag of pet food at **150.** The bag **150,** of course, is not part of the system **100;** however, the bag **150** is shown to demonstrate a source for pelletized food (seen in a bowl **140** at **152)** that is placed into the container **110.** The food may be, for example, dog food.

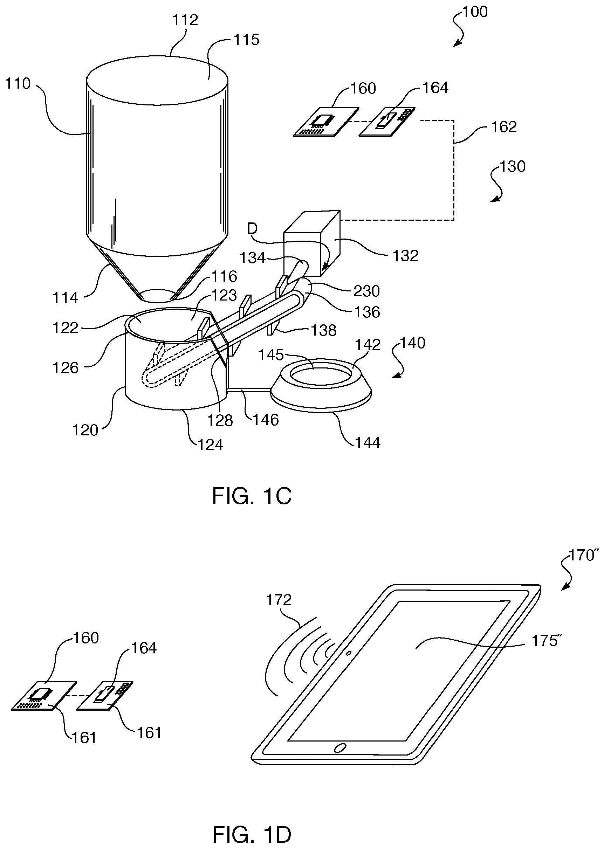

The animal feeding system **100** of **Figure 1A** also shows a feeding bowl **140.** The illustrative feeding bowl **140** includes an upper rim **142** and a supporting base **144.** The bowl **140** defines an open container **145** for receiving pellets of the dry pet food (seen at **152** in **Figure 1C****).** The bowl **140** is positioned to gravitationally receive the pet food from a conveyor system (seen at **230** in **Figures 2A** through **2D****)** that resides and operates within the housing **105.**

**Figure 1B** is another perspective view of the animal feeding system **100** of **Figure 1A****.** In **Figure 1B****,** certain parts of the system **100** are shown in exploded apart relation. These components include the container **110,** the housing **105** and the bowl **140.** A bracket **146** for supporting the bowl **140** is also shown. Of interest, the container **110** includes an upper end **112** for receiving the lid, and a lower end **114.** The lower end **114** of the container **110** has a funneled (or frusto-conical) opening **116** through which dog feed gravitationally travels.

**Figure 1C** is another perspective view of the animal feeding system **100** of **Figure 1A****,** in a modified embodiment. In this view, the housing **105** has been removed to expose a conveyor belt **230.** The conveyor belt **230** is broken up into compartments (shown at **235** in **Figure 2B****),** and is cycled by a drive motor **130** that is operated by a controller. The controller is preferably a micro-processor **160,** which in turn is in wired electrical communication with a separate user control (seen in **Figure 1D** at **170**). It is understood that the controller **160** may operate through hardware, firmware, software, or some combination thereof.

**Figure 1C** also provides a perspective view of the container **110.** As shown, the container **110** has a top end **112** and a lower end **114.** The lower end **114** has an angled surface to facilitate gravitational movement of the pet food. A bottom portion of the lower end **114** includes an opening **116** for delivering the dry pet food **152** (shown in **Figure 1A****)** from the angled surface.

The pet food is gravitationally dispensed from the container **110,** through the opening **116,** and into a receptacle **120.** In the illustrative arrangement of **Figure 1C****,** the receptacle **120** is a cylindrical body having an open top end **122** and a closed bottom end **124.** Preferably, the open top end **122** defines a lip **126** fabricated from an elastomeric or plastic material for receiving and supporting the container **110.**

In the arrangement of **Figure 1C****,** the receptacle **120** is shown as an independent body. The receptacle **120** includes an open wall portion **128.** The open wall portion **128** is dimensioned to accommodate the conveyor belt **230.** In a more preferred embodiment, and as shown in **Figure 1A****,** the receptacle **120** is integral to the housing **105** and forms a catch basin below the lower end **114** of the container **110** for catching the pet food.

The conveyor system **200** is configured to move pellets of pet food according to timed cycles. To do this, the conveyor system **200** works in conjunction with the drive motor **130.** The motor **130** is an electric motor that resides within a suitable housing **132.** Preferably, the housing **132** is fabricated from a durable, water resistant material such as metal or plastic. The motor **130** may be battery operated, but may alternatively operate under line power (electrical cord not shown). The motor **130** may have an external on/off switch, but alternatively is controlled through a digital, wireless control unit.

When activated, the drive motor **130** turns a drive shaft **134.** The drive shaft **134,** in turn, rotates a conveyor shaft (shown at **232** in **Figure 2B****)** and connected drive pulley (shown at **234** in **Figure 2B****).** Rotation of the conveyor shaft **232** is indicated in **Figure 2B** at Arrow **"D."** The mechanical interface between the drive shaft **132** and the conveyor shaft **232** may be by means of a gear. Turning of the conveyor shaft **232** causes the conveyor belt **230** to be actuated. In this way, the conveyor belt **230** is rotated by the electric motor **130** to pick up volumes of the dry pet food from the receptacle **120.**

A user control unit is shown in **Figure 1A** at **170'.** This represents a control unit that is integral to the housing **105.** The control unit **170'** preferably includes an LCD display **175'.** As an alternative, or in addition, a remote user control unit may be employed. An example in **Figure 1D****.**

**Figure 1D** provides an enlarged schematic view of the micro-processor **160** from the animal feeding system **100** of **Figure 1A****.** The micro-processor **160** resides on a printed circuit board **161.** The micro-processor **160** is in wireless electrical communication with a control unit **170"** by means of an associated receiver (or transceiver) **164** The control unit **170"** defines a micro-processor and a transmitter (or transceiver), and enables the user to program and remotely control feeding cycles and options for the feeding system **100.**

Food delivery instructions are delivered by the user to the system **100** using wireless signals **172.** The control unit **170"** includes a display **175".** The display **175"** ideally allows for a touch-screen user interface. Preferably, the control unit **170"** represents a so-called tablet that communicates with the transceiver **164** associated with the micro-processor **160** through Blue-Tooth, IR, Zigbee, WiFi, a telecommunications network, or other protocol. Alternatively, the control unit **170"** may be a general purpose computer that communicates with the transceiver **164** associated with the micro-processor **160** through a telecommunications network. Alternatively still, the control unit **170"** may be a dedicated remote control that operates in proximity to the system **100** through the use of IR signals.

As noted, the feeding system **100** also includes a feeding bowl **140.** The bowl may be fabricated from any material that is easily cleaned such as stainless steel, plastic, ceramic or even glass. The illustrative feeding bowl **140** includes an upper rim **142** and a supporting base **144.** The bowl **140** defines an open container **145** for receiving the pellets **152** of dry pet food. The bowl **140** is positioned to gravitationally receive the pet food from the conveyor belt **230** as the conveyor belt **230** is rotated by the drive shaft **132** in accordance with programming instructions.

In the arrangement of **Figure 1C****,** the bowl **140** is spaced-apart from the receptacle **120** and held in proper position by a bar **146** or other support means. The bar **146** prevents the container **145** from shifting during feeding, causing the conveyor belt **230** to "miss" the bowl **140** during dispensing. Alternatively, and as shown in **Figure 1B****,** the bowl **140** is an independent container **145** that may be freely removed for cleaning.

**Figures 2A** through **2D** provide enlarged views of the conveyor system **200** of the animal feeding system of **Figures 1A** and **1C****.**

First, **Figure 2A** provides a side view of the conveyor belt **230.** One of the side walls **237** has been removed to expose the conveyor belt **230** for illustration. **Figure 2B** is a perspective view of the conveyor belt **230** of **Figure 2A****,** with both side walls **237** intact. From **Figure 2B** it can be seen that the conveyor belt **230** includes a series of compartments **235** for holding defined volumes of dry pet food. The walls **237** help to define the compartments **235.**

**Figure 2C** is another perspective view of at least a portion of the conveyor system **200.** Here, the conveyor system **200** is shown from a side opposite that of **Figure 2A****.** No food is seen in the conveyor belt **230.** **Figure 2D** is another perspective view of portions of the conveyor system **200,** but with components shown in exploded-apart relation. Multiple threaded connectors **250** are seen, also exploded apart. The conveyor system **200** will be discussed with reference to **Figures 2A** through **2D****,** together.

As noted, the conveyor system **200** first includes a conveyor belt **230.** The conveyor belt **230** is fabricated from a durable and flexible material, such as rubber, synthetic rubber, plastic, or combinations thereof. Preferably, the conveyor is fabricated from a material that can be easily wiped or suctioned for removing food particles.

The conveyor belt **230** may be about 1.5 to 3.0 inches in width, and 1/16-inch to 1/8-inch in thickness. The conveyor belt **230** may be one long, continuous seam of material; alternatively, the conveyor belt **230** may be assembled by linking two or three or more lengths of material together, end-to-end, to form a continuous loop.

The conveyor belt **230** has opposing first **231** and second **233** ends. The drive pulley **234** resides at the first end **231,** which is the lower end, while an idle pulley **236** resides at the second opposing end **233,** which is the upper end. The conveyor belt **230** rotates or cycles about the two pulleys **234, 236.**

The drive motor **130** is in electrical communication with the micro-processor **160.** This is preferably done through a wire **162** associated with the printed circuit board **161** residing within a same housing **132** as the electric motor **130,** or otherwise residing within housing **105.** The micro-processor **160** interfaces with a transceiver **164** that receives wireless signals from the control unit **170'** and/or **170".** The transceiver **164** will include an antenna (not separately shown) to radiate or receive radio waves or other wireless signals.

In operation, the drive motor **130** rotates the drive shaft **132** according to a designated speed. The speed may optionally be determined by the pet owner during programming using the control unit **170".** As described more fully below, some larger dogs tend to gulp their food, creating health issues for the animal. For these owners, a "slow-feed" setting, or mode, may be selected that causes food to be dispensed from a conveyor end (seen in **Figure 1B** at **239**) much more slowly.

In any mode, the drive shaft **132** is mechanically engaged with and rotates the conveyor shaft **232.** The conveyor shaft **232** resides within and rotates the drive pulley **234.** The drive pulley **234** is mechanically connected to and turns the conveyor belt **230** at the first end **231.** In this way, the conveyor belt **230** is rotated by the electric motor **130** and drive shaft **132** to pick up volumes of the dry pet food.

Of interest, the conveyor belt **230** includes a series of cleats, or raised ribs **238.** In one aspect, the ribs **238** are spaced apart in 2-inch segments. Alternatively, the ribs **238** are spaced apart in 2.5-inch segments, or 3-inch segments. The ribs **238** are preferably about 0.75 to 2.5 inches in height. In this way, a volume between about 2.25 in³ to 22.5 in³ is provided for individual compartments **235.**

The ribs **238** aid in the transporting of pet food **152** along the conveyor belt **230.** Ideally, the ribs **238** are equi-distantly spaced apart in such a manner as to create designed volumes within compartments **235.** For example, a volume between ribs **238** may be 1/8th of a cup (1.8 in³), or 1/4th of a cup (3.6 in³), or 1/2 of a cup (7.2 in³). Rotation of the conveyor belt **230** is timed so that the conveyor belt **230** is advanced to deliver one 1/8th of a cup, or two 1/8th of a cup (i.e., 1/4th of a cup), for example. Those of ordinary skill in the art will understand that the amount of food that is delivered in one cycle is a function of the length of time in which the motor **130** turns the drive shaft **132,** and the volume of the compartments **235.**

In one aspect, the user selects the slow-feed mode. This causes the drive shaft 132 to turn very slowly, such as 1.0 Hz, or 1.5 Hz, and over a period of time that is 30 seconds, or 40 seconds, for example. The result is that 1/8th of a cup of food is delivered over the 30 second, or the 40 second, time period. This forces the animal waiting for food to be delivered to eat slowly.

As noted, opposing walls **237** are provided along the conveyor belt **230.** The walls **237** hold the pet food **150** between the raised ribs **138,** thereby providing the compartments **235** described above. The walls **237** terminate at a chute **239.** The chute **239** defines an exit opening, such that the pet food may be dropped from the chute **239** and into the food bowl **140** as the conveyor belt **230** is cycled. The chute is located at the end **136** of the conveyor belt **230.**

Cycling of the conveyor belt **230** causes pellets of the dry pet food (shown at **152** in **Figure 1A****)** to move from the receptacle **120,** along the conveyor belt **230,** and into a separate feeding bowl **140.** More specifically, pellets of food **152** are dropped from the chute **239** and into an opening (or open top) **145** in the bowl **140.**

The conveyor belt **230** shown in **Figures 2A** through **2D** is set at about a 50° angle. It is desirable to use at least a 15 degree angle, and more preferably at least a 20° angle, a 30° angle, or even a 45° angle relative to horizontal to provide clearance for the chute **239** above the bowl **140.**

In one aspect, the conveyor system **200** includes a brush above the conveyor belt **230** at the lower end **231.** The brush is not shown in the drawings, but it is understood that the brush would maintain an even top level between the raised ribs **238.** The brush would push excess food **152,** or kibbles back towards a next compartment **235,** thus helping to keep compartment volumes consistent.

To further aid in moving pellets **152** from the container **110** to the receptacle **120,** an optional agitator **220** may be provided. The agitator **220** is seen in **Figures 2A** through **2C****.** In one embodiment, the agitator **220** defines an elongated tooth that extends upward from the receptacle **120** and into the lower opening **116** of the container **110.** The agitator **220** reciprocates in order to move and dislodge pellets **152** at the base **114** of the container **114.**

As shown best in **Figure 2C****,** the agitator **220** is reciprocated through a series of pivot connections **221, 223, 225.** First, a pin resides along the conveyor shaft **232.** This pin serves as a first pivot connection **221.** A pair of arms **222, 224** resides intermediate the first pivot connection **221** and the agitator **220.** The two arms **222, 224** are connected by means of a pin which serves as the second pivot connection **223.** Finally, a third pin connects a distal end of the second arm **224** to a base **228** of the agitator **220.** This pin serves as the third pivot connection **225.**

As the conveyor shaft **232** rotates, the first pivot connection **221** is rotated. This causes a proximate end of the first arm **222** to rotate at the drive pulley **234.** Movement of the proximate end of the first arm **222,** in turn, imparts rotation of the pin at the second pivot connection **223.** This rotational movement produces reciprocation in a proximate end of the second arm **224** at the second pivot connection **223.** As one of ordinary skill in the art will understand, this, in turn, imparts a rotational movement at the third pivot connection **225.**

In operation, the volume of food **150** that is dispensed by the conveyor system **200** is correlated to time. Thus, the system **200** is designed so that, for example, operation of the motor **130** for 5 seconds produces two, 1/8th cup compartments **235** of food **150.** In another aspect, a volume of pellets **152** dispensed is determined by tracking the number of raised ribs **138** that have passed by or across a visual or IR sensor. In either instance, the use of the conveyor system **200** with a conveyor belt **230** having compartments **235** between raised ribs **238** provides the user or pet owner with the ability to select different feeding methods and feeding times for their pet.

In accordance with embodiments disclosed here, feeding may be free-choice, wherein a bowl is filled once or twice a day, as needed by the user. In this instance, the conveyor belt **230** may be rotated a sufficient amount of time to substantially fill the feeding bowl **140.** This may occur, for example, once in the morning and once in the evening as set by the pet owner using a digital timer. Alternatively, feeding may be incremental, thereby providing portion control. In this instance, a limited portion of food **150** is delivered by rotating the conveyor belt **230** for a shorter duration, but in, for example, two or four hour increments. This prevents the pet from eating too much food in one feeding.

In the animal feeding systems **100** of **Figures 1A** and **1C****,** a system is provided for accurately feeding a pet in controlled amounts and at controlled times. The system **100** is shown in the context of dry pellets **152.** The pellets **152** gravitationally move from the container **110,** down into the receptacle **120,** and then along the conveyor belt **230.** The pellets **152** are conveyed or moved to the chute **239** and then dropped into the feeding bowl **140** in response to rotational movement of the conveyor drive shaft **232,** moving the drive pulley **234.**

Different embodiments of the animal feeding system **100** may be provided.

First, **Figure 3** provides a perspective view a pet feeding system **300** that uses two separate containers -- container **310** that holds dry pet food, and container **330** that holds solid treats. The pet feeding system **300** is shown with certain parts in exploded-apart relation so that containers **310** and **330** may be viewed.

The container **310** gravitationally releases dry pet food to a receptacle **320,** while solid treats are gravitationally (or otherwise) dispensed from the container **330** to a treat receptacle **335.** Both the food and the treats are ultimately dispensed into a bowl **340** using a conveyor system in accordance with system **200.** Alternatively, treats may move down an angled surface and directly through the chute **239** by opening a small valve (not shown) or by turning a drive-screw (not shown).

A wall **345** is shown, separating the food container **310** from the treat container **330.** It is noted, however, that the use of a container **330** and dispensing system for pet treats is optional and not preferred. Also seen in **Figure 3** is a bracket **346** for supporting the bowl **340** relative to the dispensing system **300.**

The system **100** (or **300)** may be controlled remotely by using a digitally programmable control unit **170.** In one aspect, the user control unit resides on a fixture, such as an appliance, near the animal feeding system **100.**

**Figure 4** is a general view of the animal feeding system **300,** wherein the system **300** is residing in a user's kitchen. Here, the micro-processor **160** is controlled by a dedicated remote control unit **470.** The remote control unit **470** presents various buttons **475** for sending commands and establishing settings for the animal feeding system **300** as the user interface. The remote control unit **470** communicates wirelessly with the system **300** through an RF, Zigbee, Blue Tooth or Wi-Fi transceiver or other wireless protocol to send wireless signals **472.**

The remote control unit **470** is intended to reside close to the animal feeding system **300.** In the illustrative arrangement of **Figure 4****,** the remote control unit **470** is shown residing magnetically on a refrigerator door **450.** In this instance, the animal feeding system **400** resides in or near a user's kitchen.

The control unit **470** includes an optional "emotional feed button" **476.** This button **476** may be pressed by the user to reward a pet. Pressing button **476** causes a treat to be dispensed from the treat container **330** and into the bowl **340.** Alternatively, individual food pellets **152** may be dispensed from the receptacle **320.**

As an alternative to the remote control unit **470** residing near the animal feeding system **300,** the system **300** may have a user interface that resides on the housing **305** of the system **300** itself. **Figure 5** is a perspective view showing a control unit **570,** in one arrangement. The control unit **570** is shown in an enlarged view.

The control unit **570** may first include an LCD display screen **575.** The screen **575** may be an interactive touch screen. Alternatively or in addition, the control unit **570** may have separate pressure-sensitive command buttons. These buttons may include, for example, numerical (or alpha-numerical) buttons **530,** an "a.m." time button **532,** and a "p.m." time button **534.**

The control unit **570** may optionally have separate "Food" **522** and "Treat" **524** buttons. These allow the user to program the dispensing of food and treats separately. The control unit **570** may also have a "mode" button **532** which allows the user to cycle through feeding options. These feeding options are discussed in more detail below.

As noted, a pet feeding system may alternatively be controlled remotely using a personal digital assistant, a portable tablet, or a computer. **Figure 6** is schematic view of an animal feeding system **600**. This is intended to represent a system such as the feeding system **100** of **Figure 1****.** In the arrangement of **Figure 6****,** the animal feeding system **600** is in electrical communication with alternative user control units **670A, 670B, 670C.**

A first control unit **670A** represents a so-called smart phone or personal digital assistant. The personal digital assistant **670A** includes a display **675A** that serves as a user interface. Examples of a suitable personal digital assistant include the iPhone® from Apple, Inc. of Cupertino, California, the Samsung® Galaxy of Samsung Electronics Co., Ltd. of the Republic of Korea, and the Droid RAZR® provided by Motorola, Inc. of Schaumburg, Illinois. (It is acknowledged that Motorola, Inc. (or its telecommunications-related assets) may now be owned by Google, Inc. and that trademarks are likely owned by a trademark (or other IP) holding company out of Cerritos, California.)

A second illustrative control unit **670B** is a so-called tablet. The tablet **670B** includes a display **675B** that serves as a user interface. Examples of a suitable tablet include the iPad® available from Apple, Inc., the Google® Nexus tablet, the Samsung® Galaxy tablet, the Amazon® Kindle Fire tablet, the Lenovo® ThinkPad tablet, and the Microsoft® Surface tablet. Tablets are also considered personal digital assistants.

A third illustrative control unit **670C** represents a general purpose computer. The computer **670C** also includes a display **675C** that serves as a user interface. General purpose computers may include the iMac® available from Apple, Inc., the Connectbook™ available from Hewlett-Packard Development Company, L.P. of Houston, Texas, the Inspiron® from Dell Computer Corporation of Round Rock, Texas, and the ATIV® from Samsung Electronics Co., Ltd.

Where a personal digital assistant **670A** or a tablet **670B** is used as the processor, a dedicated software application, or "App," will need to be uploaded. Where a general purpose computer **670C** is used as the processor, a software package may be downloaded from the Internet or uploaded from a so-called thumb drive or other device having memory. More preferably, a web-based application is used.

In any of the remote devices **670A, 670B, 670C,** a wireless signal **672** is sent to the feeding system **600.** This will require the feeding system **600** to have a transceiver (shown generally at **678** but consistent with transceiver **164)** capable of receiving wireless signals. Such signals are preferably cellular-based signals sent through a wireless telecommunications network. However, other communications protocols may be used such as a co-axial cable connection through a so-called cable subscription or satellite service. Alternatively, a traditional land-based telephone line may be used.

In one aspect, the animal feeding system **600** is able to determine the presence of an animal. An animal is shown schematically at **690.** The animal **690** is wearing a collar having a communication device **695.** The communication device **695** is in accordance with the device described in U.S. Pat. No. 8,436,735 entitled "System for Detecting Information Regarding an Animal and Communicating the Information to a Remote Location." The named inventor in that patent is Chris Mainini of Knoxville, Tennessee. The '735 patent is assigned to Radio Systems Corporation.

In the arrangement of **Figure 6****,** the communication device **695** delivers a signal to the animal feeding system **600** confirming the presence of the animal in front of the bowl **640.** When the presence of pet **690** is sensed, a certain portion of food may be dispensed or a certain treat may be dispensed by the conveyor belt **230.** In one embodiment, the system **600** may be able to discern between several pets, each of whom is wearing a communication device **695.** When the presence of a second pet (shown at **1195** in **Figure 11****)** is sensed, a different portion of food may be dispensed or a different type of treat may be dispensed. Operation of such a system is described further in U.S. Pat. Publ. No. 2011/0297090, entitled "Animal Feeding Apparatus." That application is also owned by Radio Systems Corporation.

Each of the remote devices **670A, 670B, 670C** will have a display **675A, 675B, 675C.** The display **675A, 675B, 675C** will provide information to the pet owner about the status of the animal feeding system **600.** Particularly, the display **675A, 675B, 675C** will present a user interface that allows the pet owner to set or change the feeding mode and the feeding schedule.

In one aspect, the animal feeding system **600** includes a module (not shown). The module is offered as an after-market product that allows a feeding system that otherwise does not include a transceiver associated with the micro-processor **160** to communicate wirelessly with the remote device **670A, 670B, 670C.**

**Figures 7A** through **12C** present an animal feeding system **700** with different displays on a control unit **770.** The control unit **770** is intended to represent a personal digital assistant. The control unit **770** may be either a so-called smart phone or a tablet. The control unit **770** serves as a user interface for ultimately sending signals **772** to the animal feeding device **700** according to programming instructions that have been input by the user.

The user control unit **770** is in communication with an animal feeding device **700.** Preferably, communication takes place through a web-based platform, or application, that sends signals to the feeding device **700.** Such signals may be through a telecommunications network **"I."**

The displays on the control unit **770** demonstrate optional feeding modes and functions for the system **700,** in different embodiments. **Figure 7A** is a schematic view showing a first display **775** for the control unit **770.** In the view of **Figure 7A****,** the display **775** presents a feeding schedule. The feeding schedule operates according to a portion-control feeding method. Using the control unit **770,** the pet owner inputs a desired portion of food and the times of day for feeding. The pet owner may set as many feeding times per day as desired. The option is also available to repeat a designated cycle each day, or on certain days of the week. In the display **775,** each portion is 1/8th of a cup, with feeding being on two hour increments from 9:00 am to 5:00 pm.

**Figure 7B** is a second schematic view showing the control unit **770** of **Figure 7A** in wireless communication with the animal feeding device **700.** Here, a real time status report concerning feeding is shown in the display **775.** The display **775** shows that food has been dispensed. In addition, the display **775** shows that the pet **790** has approached the feeding bowl **740.**

In **Figure 7B****,** pellets **752** of dry food are shown in a feeding bowl **740.** In addition, a pet **790** is positioned in front of the feeding bowl **740.** The pet is wearing a communication device **795.** The communication device may again be in accordance with the device described in U.S. Pat. Publ. No. 2008/0190379 entitled "System for Detecting Information Regarding an Animal and Communicating the Information to a Remote Location." The communication device **795** is worn by the pet **790** and communicates with the control unit **770,** either directly or through the feeding system **700,** to inform the control unit **770** that the pet **790** is in position to eat from the feeding bowl **740,** or is at least in close proximity to the animal feeding device **700.**

It is again observed that the pet **790** is fitted with a collar having a transmitter as the communication device **795.** The transmitter is customized to communicate with the animal feeding device **700** through IR, Zigbee or Blue Tooth, or other wireless signal protocol. These signals inform the animal feeding device **700** that the pet **790** has approached the bowl **740.**

It is preferred that the display **775** shows whenever food **752** has been dispensed. This is beneficial to the remote pet owner who is not home to see food in the bowl **740.** Thus, the pet owner will receive a notification via a text message or through a software application on their personal digital assistant **770.** Optionally, a notification will also indicate when the pet **790** has approached the bowl **740.** These messages are again shown on the illustrative display **775** of **Figure 7B****.**

**Figure 8A** is another schematic view showing a display **875** for the control unit **770.** The control unit **770** is again in communication with the animal feeding device **700** through a telecommunications network **"I."** In the view of **Figure 8A****,** the display **875** does not present a feeding schedule; instead, the system **700** is now programmed to keep the feeding bowl **740** substantially full. This is according to a free-choice feeding method as selected by the pet owner.

As shown in **Figure 8A****,** the bowl **740** has dog food **752** therein. The bowl **740** is optionally equipped with a weight sensor or an IR sensor that senses when the bowl **740** has dropped below a certain weight or when the food **752** has fallen to a certain level. At such points, the conveyor belt **230** is automatically activated to re-fill the bowl **740.** Beneficially, the conveyor system **200** of the present invention is able to equate time of activation with volume of food dispensed.

In the display **875,** the pet owner is informed that the food storage container **710** is 50% full. This is based on readings from a separate sensor. Such a sensor may also be a weight sensor that senses when the container **710** has dropped below a certain weight, or an IR sensor that senses when the food **752** in the container **710** has fallen to a certain level. The display **875** also informs the owner that the feeding bowl **740** is "completely full" of food **752.** The owner receives this notification via text message or "app" message to be reassured that his or her pet has plenty of food.

**Figure 8B** is a second schematic view showing the control unit **770** in wireless communication with the animal feeding device **700.** Here, a message is being shown in the display **875** that a pet has approached the bowl **740.** The feeding bowl **740** remains full of dry pellets **752.**

It is noted that in **Figure 8B****,** a pet is again shown schematically at **790.** The pet **790** is positioned in front of the bowl **740.** The pet **790** is wearing a communication device **795** in accordance with the Mainini device described in U.S. Pat. No. 8,436,735. The communication device **795** is worn by the pet **790** and communicates with the control unit **770,** either directly or through the feeding system **700,** to inform the control unit **770** that the pet **790** is in position to eat from the feeding bowl **740.**

**Figure 9A** is another schematic view showing a display **975** for the control unit **770.** The control unit **770** is again in communication with the animal feeding device **700** through a wireless communications network **"I."** In the view of **Figure 9A****,** the display **975** again presents a feeding schedule. Here, the feeding schedule offers food portions to be dispensed periodically in 1 cup increments. Feeding begins at 9:00 a.m., followed by feeding periods of 15 minutes every 105 minutes. Thus, food is available for a 15 minute period and then is removed from pet access.

In the view of **Figure 9A****,** the feeding bowl **740** is empty (or food is otherwise unavailable). In operation, the pet owner selects a time at which feeding is to be completed for each increment. This is done using the control unit **770.** At the end of the feeding increment, a base in the bowl **740** is opened or tilted, causing food to be emptied from the bowl **740** and dropped into a storage area (not shown). The food may be retrieved by the owner later and returned to the container **710.** As an alternative embodiment, a cover may rotate over the top of the bowl **740** between feeding increments. This may be, for example, in accordance with the teachings of U.S. Patent No. 6,401,657, also owned by Radio Systems Corporation.

**Figure 9B** is a second schematic view showing the control unit **770** in wireless communication with the animal feeding device **700.** Here, a real time status report concerning feeding is shown in the display **975.** The display **975** shows that food was dispensed at 3:00 p.m. The bowl **740** has pellets **752** in it for the pet **790.**

**Figure 9C** provides a third schematic view of the control unit **770** in wireless communication with the animal feeding device **700.** Here, a new real time status report concerning feeding is shown in the display **975.** The display **975** shows that the feeding bowl **740** was emptied of any remaining food at 3:15 p.m. It can be seen in **Figure 9C** that the bowl **740** has no pellets **752** in it for the pet.

**Figure 10A** is another schematic view showing a display **1075** for the control unit **770.** The control unit **770** is again in communication with the animal feeding device **700** through wireless signals **772.** In the view of **Figure 10A****,** the display **1075** presents a new feeding schedule. The feeding schedule operates according to a portion-control feeding method, wherein each portion is 1/8th of a cup. Feeding takes place in two hour increments from 9:00 am to 5:00 pm.

The display **1075** of **Figure 10A** differs from the display **775** of **Figure 7A** in that a treat is scheduled to be dispensed at 9:00 p.m. In addition, the conveyor belt **230** is programmed to move slowly so that food is dispensed continuously but slowly over the course of a 10 to 15 minute period, depending on pet needs. This prevents the animal from gulping its food.

In **Figure 10A****,** a bowl **740** is shown with the animal feeding system **1000.** The bowl **740** is empty as a treat has not yet been dispensed.

**Figure 10B** is a second schematic view showing the control unit **770** in wireless communication with the animal feeding device **700.** Here, a real time status report concerning feeding is shown in the display **1075.** The display **1075** shows that a treat has been dispensed. "Spike has received a treat." In addition, the display **1075** shows that the pet has approached the bowl **740.**

In **Figure 10B****,** a treat **755** is shown in the bowl **740.** The treat **755** was dispensed from a treat container **715** associated with the dispensing system **700.** In addition, the pet **790** is positioned in front of the bowl **740.** The pet **790** is wearing a collar communication device **795** that electronically interfaces with the control unit **770.**

**Figure 11** is yet another schematic view of the control unit **770** in wireless communication with the animal feeding device **700.** A display **1175** for the control unit **770** is seen. Here, a real time status report of feeding activity is provided on the display **1175.** The display **1175** provides reports for two different animals, named Spike and Perry. The animals are also shown at **1190'** and **1190".**

In **Figure 11****,** pellets **752** of food have been dispensed into a feeding bowl **740.** In addition, each of pets **1190'** and **1190"** has approached the bowl **740.** Each pet **1190'** and **1190"** is wearing a communications device **1195** that electronically interfaces with the control unit **770.** In one aspect, the feeding system **700** includes a sensor that senses when each animal is in immediate proximity to the bowl **740** through the communications device **1195,** and then sends a signal **772** to the control unit **770.**

According to the display **775,** at 9:00 pm one animal **1190'** (Spike) does not have access to the bowl **740,** while the other animal **1190"** (Perry) does have access to the bowl **740.** However, at 9:15 pm Perry **1190"** has access to the bowl **740** while Spike does not. This is a demonstration of a selective access feeding method.

Selective access may be accomplished in one of several ways. This may be by enclosing the feeding bowl **740** in a separate housing with a door that allows or restricts access based on reading the communication device **1195** on the pets **1190', 1190".** Alternatively, the bowl **740** itself may be covered with a panel (not shown) that moves to cover or uncover the food **752** when triggered by a communications device **1195.** Alternatively, the bowl **740** may move, such as by rotation, to a covered or uncovered position. Alternatively still, a stimulus mechanism on the collar may be activated when the animal comes into proximity to the feeding bowl **740** at the wrong time. Such a stimulus may include a noise or the delivery of a mild electrical stimulus sent through electrodes mounted on the collars.

As can be seen, a novel animal feeding system is offered herein. The feeding system offers improved mechanical features over existing devices, including a durable conveyor system that will not bind or become clogged because of lodged food pellets. Further, the feeding system enables a user to employ multiple feeding methods through a programmable control unit, including a slow-feed method which provides a timed distribution of food in small quantities. Still further, the feeding system provides two-way communication by plugging in a connected accessory, giving the pet owner the convenience of taking a non-connected product and creating a wireless connection with the pet owner using an application that can be uploaded onto a personal digital assistant, or accessed using a general purpose computer through a website.

A method of delivering dry pet food to an animal is also provided herein. The method generally includes providing a bowl. The bowl defines a wall and an interior basin for holding a dry pet food. The method also includes filling a container with the pet food. The food in the container is positioned to gravitationally fall into a receptacle below the container. The method also includes programming an animal feeding system that periodically activates a conveyor belt for transporting the dry pet food into the bowl.

The user may select from any of the following feeding methods:
(a) portion control feeding, wherein a designated amount of food is dispensed into the feeding bowl one or more times per day, such designated amount being less than a full volume of the feeding bowl;
(b) slow-feeding, wherein a designated amount of food is dispensed into the feeding bowl one or more times per day, but with the conveyor cycling at a substantially reduced rate to limit the presentation of food to the pet;
(c) free choice feeding, wherein a set portion of food is always available to the pet to eat from whenever they desire;
(d) timed feeding, wherein a set portion of food is available to the pet for a certain period of time, and then removed at the end of that set period of time;
(e) treat dispenser feeding, wherein a solid pet treat is dispensed automatically according to a timer, or immediately in response to a signal sent by the user through a remote control unit; and
(f) selective access feeding, wherein the animal feeding system is able to distinguish between two or more pets such that a selected pet is unable to access a feeding bowl at certain times.

The present method also allows the pet owner to input data about a pet. The data appears on a display. **Figure 12A** presents an illustrative display **1275** from a control unit **770.** The display **1275** presents health status and goals for a pet.

**Figure 12B** presents the same display **1275.** Here, the display **1275** shows a feeding schedule and user notes. **Figure 12C** is still another view of the display **1275.** Here, an emotional feed button is shown, ready to dispense a treat. User notes are also shown.

The display **1275** of **Figures 12A, 12B** and **12C** demonstrate that the animal feeding systems herein may be used as part of a holistic weight management system. The weight management system enables the user to track, record, monitor and maintain their pet's weight and feeding routines. Such data can also be shared, reviewed and altered with the interaction of a veterinarian.

The automatic animal feeding system can be set up and operated locally through a control unit that is located on the device itself. In one embodiment, the pet owner can also attach a "module" that will allow the feeding device to be accessed via wireless communication. In this scenario, a software application may be downloaded to communicate with the module and to interface with and operate the animal feeding system remotely.

In certain embodiments, the system notifies the pet owner when food or a treat have been dispensed, as well as when the pet has approached the bowl (that is, when the pet is wearing a communications collar). In one aspect, the system will also alert the pet owner when the container and the bowl are at full, half full, or near empty status. If there is a power issue, the system will alert the owner as to the battery status.

Variations of the system and method for feeding an animal may fall within the scope of the claims, below. It will be appreciated that the inventions are susceptible to modification, variation and change without departing from the scope thereof, as defined in the independent claims.

## Claims

1. An animal feeding system, comprising:
a housing (105);
a container (110, 310) dimensioned to hold pet food (150, 152) in pellet form, the container having an upper end (112) and a lower end (114), with the lower end having an opening (116) through which the pet food travels;
a receptacle (120, 320) for receiving the pet food as it gravitationally falls through the opening (116) in the container;
a conveyor system (200) for moving the dry pet food from the receptacle (120, 320) and to a feeding bowl (140, 340, 640, 740), the conveyor system (200) residing within the housing and having a conveyor belt (230), raised ribs (238) spaced apart along the conveyor belt (230) forming compartments (235) for holding designated volumes of the pet food (150, 152), and a drive motor (130) for causing cycling of the conveyor belt (230), and wherein the conveyor belt (230) is angled upward at least 15 degrees relative to horizontal forming a first lower end (231) and a second upper end (233);
the first lower end (231) of the conveyor belt (230) positioned within the receptacle (120, 320), wherein the first lower end (231) is configured to pick up designated volumes of the pet food during the cycling of the conveyor belt (230), wherein the second upper end (233) of the conveyor belt (230) is configured to gravitationally drop the pet food from the compartments (235) through a housing chute (239) and into a feeding bowl (140, 340, 640, 740) during the cycling of the conveyor belt (230), wherein the picking up the designated volumes includes the raised ribs (238) rotating through a portion of the receptacle (120, 320);
a user control unit (170, 170', 170", 470, 570, 670A, 670B, 670C, 770) having a user interface by which a user may program the animal feeding system to dispense food according to a schedule; and
a micro-processor (160) in electrical communication with the motor (130) configured to deliver start and stop signals to the motor in response to the schedule selected by the user.

2. The animal feeding system of claim 1, wherein the user control unit (170') resides on the housing (105), and is in wired electrical communication with the micro-processor (160) for sending the control signals to the micro-processor (160).

3. The animal feeding system of claim 1, wherein:
the container (110, 310) resides on and is at least partially supported by the housing (105), wherein the feeding system comprises:
the housing chute (239) that is integral to the housing (105) and defining an outlet through which the pet food falls from the second upper end (233) of the conveyor belt (230) and into the feeding bowl (140); and
an agitator (220) residing proximate the first lower end (231) of the conveyor belt and extending upward into the opening (116) of the container, the agitator (220) reciprocating in response to motion of the drive motor (130), and further optionally
wherein the agitator (220) pivots about a pin connected to the housing.

4. The animal feeding system of claim 1, wherein:
the control unit (170", 470) resides remotely from the housing (105);
the control unit is in wireless electrical communication with the micro-processor (160); and
the animal feeding system further comprises a transceiver (164) associated with the micro-processor for receiving wireless signals, and optionally wherein:
(i) the control unit is a general purpose computer connectible to a website; and the control unit communicates with the transceiver (164) associated with the micro-processor (160) via a telecommunications network in response to commands entered by the user through the website, or
(ii) the control unit is a personal digital assistant having a transceiver; and
the transceiver in the personal digital assistant communicates with the transceiver associated with the micro-processor via a telecommunications network, or via wireless signals according to RF, Zigbee, Wi-Fi, or Blue-Tooth protocol.

5. The animal feeding system of claim 1, wherein the drive motor (130) comprises an electric drive motor that, upon actuation, rotates a drive shaft (134), which in turn imparts movement to the conveyor belt (230), and optionally wherein the conveyor system comprises:
walls (237) along sides of the conveyor for retaining dry pet food along the conveyor belt (230) to further define the compartments (235);
a drive pulley (234) in operative mechanical engagement with the drive shaft (134) of the drive motor proximate one end of the conveyor belt; and
an idle pulley (236) proximate an opposing end of the conveyor belt.

6. The animal feeding system of claim 1, wherein by using the control unit (170, 170', 170", 470, 570, 670A, 670B, 670C, 770), a user may select from any of the following feeding methods:
(a) portion control feeding, wherein a designated amount of food is dispensed into the feeding bowl (140, 340, 640, 740) one or more times per day, such designated amount being less than a full volume of the feeding bowl; and
(b) free choice feeding, wherein a set portion of food is always available to the pet to eat from whenever they desire,
and optionally wherein by using the control unit, a user may further control the amount of time over which food is dispensed from the conveyor belt (230) under the (a) portion control feeding method, thereby accomplishing a slow-feeding method.

7. The animal feeding system of claim 1, wherein the feeding bowl (140, 340, 640, 740) is integral with or connected to the housing (105).

8. A method of delivering dry pet food to an animal, comprising:
providing a feeding bowl (140, 340, 640, 740), wherein the feeding bowl defines a wall and an interior basin for holding the pet food;
filling a container (110, 310) with pet food such that the food in the container is positioned to gravitationally fall into a receptacle (120, 320) below the container;
using a control unit (170, 170', 170", 470, 570, 670A, 670B, 670C, 770), programming an animal feeding system to activate a conveyor belt (230) for transporting the dry pet food from the receptacle and into the bowl in defined volumes and according to a feeding schedule, wherein the conveyor belt comprises raised ribs (238) spaced apart along the conveyor belt forming compartments (235) for holding defined volumes of the pet food, wherein the conveyor belt is angled upward at least 15 degrees relative to horizontal forming a first lower end (231) and a second upper end (233), wherein the first lower end of the conveyor belt is positioned within the receptacle (120, 320), wherein the first lower end (231) is configured to pick up the defined volumes of the pet food during cycling of the conveyor belt, wherein the second upper end (233) of the conveyor belt is configured to gravitationally drop the pet food from the compartments through a housing chute (239) and into the feeding bowl during the cycling of the conveyor belt, wherein the picking up the defined volumes includes the raised ribs (238) rotating through a portion of the receptacle (120, 320); and
wherein the animal feeding system further comprises:
a housing (105) in which the conveyor belt (230) at least partially resides;
a drive motor (130) for causing cycling of the conveyor belt (230); and
a micro-processor (160) in electrical communication with the motor (130) configured to deliver start and stop signals to the drive motor in response to the schedule selected by the user.

9. The method of claim 8, wherein:
(i) the defined volume is based on running the conveyor for a designated period of time, or
(ii) wherein the defined volumes are based on sensing a weight of the bowl (140, 340, 640, 740) or a weight of food in the bowl, or
(iii) wherein the defined volumes are based on advancing the conveyor a designated distance.

10. The method of claim 8, wherein:
the container (110, 310), the receptacle (120, 320) and the control unit (170, 170', 170", 470, 570, 670A, 670B, 670C, 770) are part of an animal feeding system;
the container is dimensioned to hold dry pet food in pellet form, the container having an upper end (112) and a lower end (114), with the lower end having an opening (116) through which the pet food travels;
the conveyor belt comprises a drive motor (130) for causing cycling of the conveyor belt;
the micro-processor (160) comprises a transceiver (164) for receiving wireless signals; and
the control unit has a transceiver that communicates with the transceiver (164) associated with the micro-processor using wireless signals.

11. The method of claim 10, wherein:
walls (237) adjacent the conveyor belt (230) support the pet food between the raised ribs (238);
the control unit is a general purpose computer (670C) connected to a website; and
the control unit communicates with the transceiver (164) associated with the micro-processor via a telecommunications network in response to commands entered by the user through the website.

12. The method of claim 10, wherein:
the control unit is a personal digital assistant (670A, 670B) having a transceiver; and
the transceiver in the personal digital assistant communicates with the transceiver (164) associated with the micro-processor via a telecommunications network, or via wireless signals according to RF, Zigbee, Wi-Fi, or Blue-Tooth protocol.

13. The method of claim 10, wherein:
the container (110, 310) resides on and is at least partially supported by the housing (105), wherein the housing chute (239) is integral to the housing and defines an outlet through which the pet food falls from the second upper end (233) of the conveyor belt (230) and into the feeding bowl (140, 340, 640, 740); and
an agitator (220) residing proximate the lower end of the conveyor belt and extending upward into the opening (116) of the container, the agitator reciprocating in response to motion of the drive motor (130), and further optionally wherein the drive motor comprises an electric drive motor that, upon actuation, rotates a drive shaft (134), which in turn imparts movement to the conveyor belt.

14. The method of claim 12, wherein by using the control unit (170, 170', 170", 470, 570, 670A, 670B, 670C, 770), a user may select from any of the following feeding methods:
(a) portion control feeding, wherein a designated amount of food is dispensed into the feeding bowl (140, 340, 640, 740) one or more times per day, such designated amount being less than a full volume of the feeding bowl; and
(b) free choice feeding, wherein a set portion of food is always available to the pet to eat from whenever they desire.

15. The method of claim 14, wherein by using the control unit (170, 170', 170", 470, 570, 670A, 670B, 670C, 770), a user may further control the amount of time over which food is dispensed from the conveyor belt (230) under the (a) portion control feeding method, thereby accomplishing a slow-feeding method, or
wherein the method further comprises:
fitting at least one animal with a communications device (695) designed to send a signal that enables the animal feeding system to sense the presence of the fitted animal in immediate proximity to the bowl, or
wherein the method further comprises:
fitting at least one animal with a communications device (695) designed to send a signal that enables the animal feeding system to sense the presence of the fitted animal in immediate proximity to the bowl, and
receiving a text message on a display (775) associated with the user control unit in response to a sensor in electrical communication with the micro-processor advising that (i) a pet has approached the feeding bowl, (ii) the container is at least 50% empty, (iii) a pet has access to the feeding bowl, (iv) a pet does not have access to the feeding bowl, or (v) the feeding bowl is substantially empty.

## Patentansprüche

1. Tierfütterungssystem, umfassend:
ein Gehäuse (105);
einen Behälter (110, 310), der dafür bemessen ist, Heimtierfutter (150, 152) in Form von Pellets aufzunehmen, wobei der Behälter ein oberes Ende (112) und ein unteres Ende (114) aufweist, wobei das untere Ende eine Öffnung (116) aufweist, durch die sich das Heimtierfutter bewegt;
ein Sammelgefäß (120, 320) zum Aufnehmen des Heimtierfutters, wenn es schwerkraftbedingt durch die Öffnung (116) im Behälter fällt;
ein Fördersystem (200) zum Bewegen des Heimtier-Trockenfutters aus dem Sammelgefäß (120, 320) und zu einem Fressnapf (140, 340, 640, 740), wobei das Fördersystem (200) sich innerhalb des Gehäuses befindet und Folgendes aufweist: ein Förderband (230), erhabene Rippen (238), die entlang des Förderbandes (230) beabstandet angeordnet sind und Fächer (235) zum Aufnehmen vorgesehener Volumina des Heimtierfutters (150, 152) bilden, und einen Antriebsmotor (130) zum Bewirken des Umlaufens des Förderbandes (230), und worin das Förderband (230) um mindestens 15 Grad relativ zur Horizontalen nach oben geneigt ist, wobei es ein erstes unteres Ende (231) und ein zweites oberes Ende (233) bildet;
wobei das erste untere Ende (231) des Förderbandes (230) innerhalb des Sammelgefäßes (120, 320) positioniert ist, worin das erste untere Ende (231) dafür konfiguriert ist, während des Umlaufens des Förderbandes (230) vorgesehene Volumina des Heimtierfutters mitzunehmen, worin das zweite obere Ende (233) des Förderbandes (230) dafür konfiguriert ist, das Heimtierfutter während des Umlaufens des Förderbandes (230) schwerkraftbedingt aus den Fächern (235) durch eine Gehäuserutsche (239) und in einen Fressnapf (140, 340, 640, 740) fallen zu lassen, worin das Mitnehmen der vorgesehenen Volumina einschließt, dass die erhabenen Rippen (238) sich durch einen Abschnitt des Sammelgefäßes (120, 320) drehen;
eine Benutzersteuerungseinheit (170, 170', 170", 470, 570, 670A, 670B, 670C, 770) mit einer Benutzerschnittstelle, mittels derer ein Benutzer das Tierfütterungssystem programmieren kann, um Futter gemäß einem Zeitplan abzugeben; und
einen Mikroprozessor (160) in elektrischer Kommunikation mit dem Motor (130), der dafür konfiguriert ist, als Reaktion auf den durch den Benutzer ausgewählten Zeitplan Start- und Stoppsignale an den Motor auszugeben.

2. Tierfütterungssystem nach Anspruch 1, worin die Benutzersteuerungseinheit (170') sich auf dem Gehäuse (105) befindet und in drahtgebundener elektrischer Kommunikation mit dem Mikroprozessor (160) steht, um die Steuerungssignale an den Mikroprozessor (160) zu senden.

3. Tierfütterungssystem nach Anspruch 1, worin:
der Behälter (110, 310) sich auf dem Gehäuse (105) befindet und mindestens teilweise durch dieses getragen wird, worin das Fütterungssystem umfasst:
die Gehäuserutsche (239), die aus einem Stück mit dem Gehäuse (105) ausgebildet ist und einen Auslass definiert, durch den das Heimtierfutter vom zweiten oberen Ende (233) des Förderbandes (230) und in den Fressnapf (140) fällt; und
ein Rührwerk (220), das sich in der Nähe des ersten unteren Endes (231) des Förderbandes befindet und sich nach oben in die Öffnung (116) des Behälters erstreckt, wobei das Rührwerk (220) sich als Reaktion auf die Bewegung des Antriebsmotors (130) hin und her bewegt, und ferner optional:
worin das Rührwerk (220) sich um einen mit dem Gehäuse verbundenen Zapfen schwenkt.

4. Tierfütterungssystem nach Anspruch 1, worin:
die Steuerungseinheit (170", 470) sich vom Gehäuse (105) entfernt befindet;
die Steuerungseinheit in drahtloser elektrischer Kommunikation mit dem Mikroprozessor (160) steht; und
das Tierfütterungssystem ferner einen dem Mikroprozessor zugeordneten Sendeempfänger (164) zum Empfangen drahtloser Signale umfasst, und worin optional:
(i) die Steuerungseinheit ein Mehrzweckcomputer ist, der mit einer Website verbindbar ist; und
die Steuerungseinheit als Reaktion auf Befehle, die durch den Benutzer über die Website eingegeben wurden, mit dem Sendeempfänger (164), der dem Mikroprozessor (160) zugeordnet ist, über ein Telekommunikationsnetz kommuniziert, oder
(ii) die Steuerungseinheit ein persönlicher digitaler Assistent mit einem Sendeempfänger ist; und
der Sendeempfänger im persönlichen digitalen Assistenten mit dem Sendeempfänger, der dem Mikroprozessor zugeordnet ist, über ein Telekommunikationsnetzwerk oder über drahtlose Signale nach dem RF-, Zigbee-, WiFi- oder Bluetooth-Protokoll kommuniziert.

5. Tierfütterungssystem nach Anspruch 1, worin der Antriebsmotor (130) einen elektrischen Antriebsmotor umfasst, der bei Betätigung eine Antriebswelle (134) dreht, die wiederum das Förderband (230) in Bewegung setzt, und worin optional das Fördersystem umfasst:
Wände (237) entlang der Seiten des Förderers zum Halten von Heimtier-Trockenfutter entlang des Förderbandes (230), um die Fächer (235) weiter zu definieren;
eine Antriebsrolle (234) in betrieblichem mechanischem Eingriff mit der Antriebswelle (134) des Antriebsmotors nahe einem Ende des Förderbandes; und
eine Umlenkrolle (236) nahe einem gegenüberliegenden Ende des Förderbandes.

6. Tierfütterungssystem nach Anspruch 1, worin ein Benutzer durch Verwenden der Steuerungseinheit (170, 170', 170", 470, 570, 570, 670A, 670B, 670C, 770) aus jeglichen der folgenden Fütterungsverfahren auswählen kann:
(a) Portionssteuerungsfütterung, worin eine vorgesehene Menge an Futter einmal oder mehrmals pro Tag in den Fressnapf (140, 340, 640, 740) abgegeben wird, wobei eine derartige vorgesehene Menge kleiner als ein Gesamtvolumen des Futternapfs ist; und
(b) Fütterung nach freier Wahl, worin immer eine vorgegebene Futterportion für das Heimtier zum Fressen verfügbar ist, wann immer es möchte,
und worin optional ein Benutzer durch Verwenden der Steuerungseinheit die Zeitspanne, über die beim (a) Portionssteuerungsfütterungsverfahren Futter vom Förderband (230) abgegeben wird, weiter steuern kann, wodurch ein Langsamfütterungsverfahren verwirklicht wird.

7. Tierfütterungssystem nach Anspruch 1, worin der Fressnapf (140, 340, 640, 740) aus einem Stück mit dem Gehäuse (105) oder damit verbunden ist.

8. Verfahren zum Ausgeben von Heimtier-Trockenfutter an ein Tier, umfassend:
Bereitstellen eines Fressnapfs (140, 340, 640, 740), worin der Fressnapf eine Wand und ein inneres Becken zum Aufnehmen des Heimtierfutters definiert;
Füllen eines Behälters (110, 310) mit Heimtierfutter, sodass das Futter im Behälter so positioniert ist, dass es schwerkraftbedingt in ein Sammelgefäß (120, 320) unterhalb des Behälters fällt;
unter Verwendung einer Steuerungseinheit (170, 170', 170", 470, 570, 670A, 670B, 670C, 770) erfolgendes Programmieren eines Tierfütterungssystems, um ein Förderband (230) zum Transportieren des Heimtier-Trockenfutters aus dem Behälter und in den Napf zu aktivieren, und zwar in definierten Volumina und gemäß einem Fütterungsplan, worin das Förderband erhabene Rippen (238) umfasst, die entlang des Förderbandes beabstandet sind und Fächer (235) zum Aufnehmen definierter Volumina des Heimtierfutters bilden, worin das Förderband um mindestens 15 Grad relativ zur Horizontalen nach oben geneigt ist, wobei es ein erstes unteres Ende (231) und ein zweites oberes Ende (233) bildet, worin das erste untere Ende des Förderbandes innerhalb des Sammelgefäßes (120, 320) positioniert ist, worin das erste untere Ende (231) dafür konfiguriert ist, während des Umlaufens des Förderbandes definierte Volumina des Heimtierfutters mitzunehmen, worin das zweite obere Ende (233) des Förderbandes (230) dafür konfiguriert ist, das Heimtierfutter während des Umlaufens des Förderbandes (230) schwerkraftbedingt aus den Fächern durch eine Gehäuserutsche (239) und in den Fressnapf fallen zu lassen, worin das Mitnehmen der definierten Volumina einschließt, dass die erhabenen Rippen (238) sich durch einen Abschnitt des Sammelgefäßes (120, 320) drehen; und
worin das Tierfütterungssystem ferner umfasst:
ein Gehäuse (105), in dem das Förderband (230) sich mindestens teilweise befindet;
einen Antriebsmotor (130) zum Bewirken des Umlaufens des Förderbandes (230); und
einen Mikroprozessor (160) in elektrischer Kommunikation mit dem Motor (130), der dafür konfiguriert ist, als Reaktion auf den durch den Benutzer ausgewählten Zeitplan Start- und Stoppsignale an den Antriebsmotor auszugeben.

9. Verfahren nach Anspruch 8, worin:
(i) das definierte Volumen darauf basiert, dass der Förderer für einen bestimmten Zeitraum läuft, oder
(ii) worin die definierten Volumina auf dem Erfassen eines Gewichts des Fressnapfs (140, 340, 640, 740) oder eines Gewichts des Futters im Napf basieren, oder
(iii) worin die definierten Volumina auf dem Weiterlaufen des Förderbandes um eine vorgesehene Strecke beruht.

10. Verfahren nach Anspruch 8, worin:
der Behälter (110, 310), das Sammelgefäß (120, 320) und die Steuerungseinheit (170, 170', 170", 470, 570, 670A, 670B, 670C, 770) Teil eines Tierfütterungssystems sind;
der Behälter dafür bemessen ist, Heimtier-Trockenfutter in Form von Pellets aufzunehmen, wobei der Behälter ein oberes Ende (112) und ein unteres Ende (114) aufweist, wobei das untere Ende eine Öffnung (116) aufweist, durch die sich das Heimtierfutter bewegt;
das Förderband einen Antriebsmotor (130) zum Bewirken des Umlaufens des Förderbandes umfasst;
der Mikroprozessor (160) einen Sendeempfänger (164) zum Empfangen drahtloser Signale umfasst; und
die Steuerungseinheit einen Sendeempfänger aufweist, der mit dem Sendeempfänger (164), der dem Mikroprozessor zugeordnet ist, unter Verwendung drahtloser Signale kommuniziert.

11. Verfahren nach Anspruch 10, wobei:
an das Förderband (230) angrenzende Wände (237) das Heimtierfutter zwischen den erhabenen Rippen (238) stützen;
die Steuerungseinheit ein Mehrzweckcomputer (670C) ist, der mit einer Website verbunden ist; und
die Steuerungseinheit als Reaktion auf Befehle, die durch den Benutzer über die Website eingegeben wurden, mit dem Sendeempfänger (164), der dem Mikroprozessor zugeordnet ist, über ein Telekommunikationsnetz kommuniziert.

12. Verfahren nach Anspruch 10, worin:
die Steuerungseinheit ein persönlicher digitaler Assistent (670A, 670B) mit einem Sendeempfänger ist; und
der Sendeempfänger im persönlichen digitalen Assistenten mit dem Sendeempfänger (164), der dem Mikroprozessor zugeordnet ist, über ein Telekommunikationsnetzwerk oder über drahtlose Signale nach dem RF-, Zigbee-, WiFi- oder Bluetooth-Protokoll kommuniziert.

13. Verfahren nach Anspruch 10, worin:
der Behälter (110, 310) sich auf dem Gehäuse (105) befindet und mindestens teilweise durch dieses getragen wird, worin die Gehäuserutsche (239) aus einem Stück mit dem Gehäuse ausgebildet ist und einen Auslass definiert, durch den das Heimtierfutter vom zweiten oberen Ende (233) des Förderbandes (230) und in den Fressnapf (140, 340, 640, 740) fällt; und
ein Rührwerk (220) sich in der Nähe des unteren Endes des Förderbandes befindet und sich nach oben in die Öffnung (116) des Behälters erstreckt, wobei das Rührwerk sich als Reaktion auf die Bewegung des Antriebsmotors (130) hin und her bewegt, und worin ferner der Antriebsmotor (130) optional einen elektrischen Antriebsmotor umfasst, der bei Betätigung eine Antriebswelle (134) dreht, die wiederum das Förderband in Bewegung setzt.

14. Verfahren nach Anspruch 12, worin ein Benutzer durch Verwenden der Steuerungseinheit (170, 170', 170", 470, 570, 670A, 670B, 670C, 770) aus jeglichen der folgenden Fütterungsverfahren auswählen kann:
(a) Portionssteuerungsfütterung, worin eine vorgesehene Menge an Futter einmal oder mehrmals pro Tag in den Fressnapf (140, 340, 640, 740) abgegeben wird, wobei eine derartige vorgesehene Menge kleiner als ein Gesamtvolumen des Futternapfs ist; und
(b) Fütterung nach freier Wahl, worin immer eine vorgegebene Futterportion für das Heimtier zum Fressen verfügbar ist, wann immer es möchte.

15. Verfahren nach Anspruch 14, worin ein Benutzer durch Verwenden der Steuerungseinheit (170, 170', 170", 470, 570, 670A, 670B, 670C, 770) die Zeitspanne, über die beim (a) Portionssteuerungsfütterungsverfahren Futter vom Förderband (230) abgegeben wird, weiter steuern kann, wodurch ein Langsamfütterungsverfahren verwirklicht wird, oder
worin das Verfahren ferner umfasst:
Ausrüsten mindestens eines Tiers mit einer Kommunikationsvorrichtung (695), die dazu bestimmt ist, ein Signal zu senden, das dem Tierfütterungssystem ermöglicht, die Anwesenheit des ausgerüsteten Tiers in unmittelbarer Nähe des Napfs zu erfassen, oder
worin das Verfahren ferner umfasst:
Ausrüsten mindestens eines Tiers mit einer Kommunikationsvorrichtung (695), die dazu bestimmt ist, ein Signal zu senden, das dem Tierfütterungssystem ermöglicht, die Anwesenheit des ausgerüsteten Tiers in unmittelbarer Nähe des Napfs zu erfassen, und
Empfangen einer Textnachricht auf einer der Benutzersteuerungseinheit zugeordneten Anzeige (775) als Reaktion darauf, dass ein Sensor in elektrischer Kommunikation mit dem Mikroprozessor darauf hinweist, dass (i) ein Heimtier sich dem Futternapf genähert hat, (ii) der Behälter mindestens 50% leer ist, (iii) ein Heimtier Zugang zum Futternapf hat, (iv) ein Heimtier keinen Zugang zum Futternapf hat, oder (v) der Futternapf im Wesentlichen leer ist.

## Revendications

1. Système d'alimentation pour animaux, comprenant :
un logement (105) ;
un récipient (110, 310) dimensionné pour contenir des aliments pour animaux domestiques (150, 152) sous la forme de granules, le récipient présentant une extrémité supérieure (112) et une extrémité inférieure (114), dans lequel l'extrémité inférieure présente une ouverture (116) à travers laquelle sont acheminés les aliments pour animaux domestiques ;
un réceptacle (120, 320) destiné à recevoir les aliments pour animaux domestiques à mesure qu'ils tombent par gravité à travers l'ouverture (116) dans le récipient ;
un système de transport (200) destiné à déplacer les aliments secs pour animaux domestiques, du réceptacle (120, 320) vers une mangeoire (140, 340, 640, 740), le système de transport (200) résidant dans le logement et présentant une bande transporteuse (230), des tasseaux (238) espacés le long de la bande transporteuse (230) formant des compartiments (235) destinés à contenir des volumes désignés d'aliments pour animaux domestiques (150, 152), et un moteur d'entraînement (130) destiné à occasionner un cyclage de la bande transporteuse (230), et dans lequel la bande transporteuse (230) est inclinée vers le haut d'au moins 15 degrés par rapport à l'horizontale, formant une première extrémité inférieure (231) et une seconde extrémité supérieure (233) ;
dans lequel la première extrémité inférieure (231) de la bande transporteuse (230) est positionnée à l'intérieur du réceptacle (120, 320), dans lequel la première extrémité inférieure (231) est configurée pour récupérer des volumes désignés d'aliments pour animaux domestiques pendant le cyclage de la bande transporteuse (230), dans lequel la seconde extrémité supérieure (233) de la bande transporteuse (230) est configurée pour faire tomber par gravité les aliments pour animaux domestiques des compartiments (235) à travers une goulotte de logement (239) et dans une mangeoire (140, 340, 640, 740) pendant le cyclage de la bande transporteuse (230), dans lequel, dans le cadre de la récupération des volumes désignés, les tasseaux (238) tournent à travers une partie du réceptacle (120, 320) ;
une unité de commande utilisateur (170, 170', 170", 470, 570, 670A, 670B, 670C, 770) présentant une interface utilisateur par le biais de laquelle un utilisateur peut programmer le système d'alimentation pour animaux afin de distribuer des aliments selon un programme ; et
un microprocesseur (160) en communication électrique avec le moteur d'entraînement (130) configuré pour délivrer des signaux de démarrage et d'arrêt au moteur, en réponse au programme sélectionné par l'utilisateur.

2. Système d'alimentation pour animaux selon la revendication 1, dans lequel l'unité de commande utilisateur (170') réside sur le logement (105) et est en communication électrique filaire avec le microprocesseur (160) en vue d'envoyer les signaux de commande au microprocesseur (160).

3. Système d'alimentation pour animaux selon la revendication 1, dans lequel :
le récipient (110, 310) réside sur et est au moins partiellement pris en charge par le logement (105), dans lequel le système d'alimentation comprend :
la goulotte de logement (239) qui est solidaire du logement (105), et définissant une sortie à travers laquelle les aliments pour animaux domestiques tombent de la seconde extrémité supérieure (233) de la bande transporteuse (230) dans la mangeoire (140) ; et
un agitateur (220) résidant à proximité de la première extrémité inférieure (231) de la bande transporteuse et s'étendant vers le haut dans l'ouverture (116) du récipient, l'agitateur (220) effectuant un mouvement de va-et-vient en réponse au mouvement du moteur d'entraînement (130), et en outre, optionnellement
dans lequel l'agitateur (220) pivote autour d'une broche connectée au logement.

4. Système d'alimentation pour animaux selon la revendication 1, dans lequel :
l'unité de commande (170", 470) réside à distance du logement (105) ;
l'unité de commande est en communication électrique sans fil avec le microprocesseur (160) ; et
le système d'alimentation pour animaux comprend en outre un émetteur-récepteur (164) associé au microprocesseur pour recevoir des signaux sans fil, et optionnellement dans lequel :
(i) l'unité de commande est un ordinateur universel pouvant être connecté à un site web ; et
l'unité de commande communique avec l'émetteur-récepteur (164) associé au microprocesseur (160) par l'intermédiaire d'un réseau de télécommunication en réponse à des instructions entrées par l'utilisateur à travers le site web ; ou
(ii) l'unité de commande est un assistant numérique personnel présentant un émetteur-récepteur ; et
l'émetteur-récepteur dans l'assistant numérique personnel communique avec l'émetteur-récepteur associé au microprocesseur par l'intermédiaire d'un réseau de télécommunication ou par l'intermédiaire de signaux sans fil selon le protocole RF, Zigbee, Wi-Fi ou Bluetooth.

5. Système d'alimentation pour animaux selon la revendication 1, dans lequel le moteur d'entraînement (130) comprend un moteur d'entraînement électrique qui, lorsqu'il est actionné, fait tourner un arbre d'entraînement (134) qui, à son tour, communique un mouvement à la bande transporteuse (230), et optionnellement, dans lequel le système de transport comprend :
des parois (237) le long des côtés du transporteur pour retenir les aliments secs pour animaux domestiques le long de la bande transporteuse (230) afin de définir davantage les compartiments (235) ;
une poulie d'entraînement (234) en engagement mécanique opérationnel avec l'arbre d'entraînement (134) du moteur d'entraînement à proximité d'une extrémité de la bande transporteuse ; et
une poulie libre (236) à proximité d'une extrémité opposée de la bande transporteuse.

6. Système d'alimentation pour animaux selon la revendication 1, dans lequel, en utilisant l'unité de commande (170, 170', 170", 470, 570, 670A, 670B, 670C, 770), un utilisateur peut choisir parmi l'une quelconque des méthodes d'alimentation suivantes :
(a) une alimentation avec commande de dosage, dans laquelle une quantité désignée d'aliments est distribuée dans la mangeoire (140, 340, 640, 740) une ou plusieurs fois par jour, ladite quantité désignée étant inférieure à un volume total de la mangeoire ; et
(b) une alimentation à choix libre, dans laquelle une portion d'aliments définie est toujours disponible pour que l'animal domestique ait la liberté de manger à sa guise ;
et optionnellement, dans lequel, en utilisant l'unité de commande, un utilisateur peut en outre commander la durée pendant laquelle les aliments sont distribués à partir de la bande transporteuse (230) selon la méthode (a) d'alimentation avec commande de dosage, ce qui permet d'obtenir ainsi une méthode d'alimentation lente.

7. Système d'alimentation pour animaux selon la revendication 1, dans lequel la mangeoire (140, 340, 640, 740) est solidaire du logement (105) ou raccordée à celui-ci.

8. Procédé de distribution d'aliments secs pour animaux domestiques à un animal, comprenant les étapes ci-dessous consistant à :
fournir une mangeoire (140, 340, 640, 740), dans lequel la mangeoire définit une paroi et un bassin intérieur pour contenir les aliments pour animaux domestiques ;
remplir un récipient (110, 310) avec des aliments pour animaux domestiques de sorte que les aliments dans le récipient sont positionnés pour tomber par gravité dans un réceptacle (120, 320) sous le récipient ;
en utilisant une unité de commande (170, 170', 170", 470, 570, 670A, 670B, 670C, 770), programmer un système d'alimentation pour animaux pour activer une bande transporteuse (230) destinée à transporter les aliments secs pour animaux domestiques du réceptacle vers la mangeoire, selon des volumes définis, et selon un programme d'alimentation, dans lequel la bande transporteuse comprend des tasseaux (238) espacés le long de la bande transporteuse, formant des compartiments (235) pour contenir des volumes définis d'aliments pour animaux domestiques, dans lequel la bande transporteuse est inclinée vers le haut d'au moins 15 degrés par rapport à l'horizontale, formant une première extrémité inférieure (231) et une seconde extrémité supérieure (233), dans lequel la première extrémité inférieure de la bande transporteuse est positionnée dans le réceptacle (120, 320), dans lequel la première extrémité inférieure (231) est configurée pour récupérer les volumes définis d'aliments pour animaux domestiques lors du cyclage de la bande transporteuse, dans lequel la seconde extrémité supérieure (233) de la bande transporteuse est configurée pour faire tomber par gravité les aliments pour animaux domestiques, des compartiments, à travers une goulotte de logement (239), dans la mangeoire, pendant le cyclage de la bande transporteuse, dans lequel, dans le cadre de la récupération des volumes définis, les tasseaux (238) tournent à travers une partie du réceptacle (120, 320) ; et
dans lequel le système d'alimentation pour animaux comprend en outre :
un logement (105) dans lequel la bande transporteuse (230) réside au moins partiellement ;
un moteur d'entraînement (130) pour occasionner le cyclage de la bande transporteuse (230) ; et
un microprocesseur (160) en communication électrique avec le moteur d'entraînement (130) configuré pour délivrer des signaux de démarrage et d'arrêt au moteur d'entraînement en réponse au programme sélectionné par l'utilisateur.

9. Procédé selon la revendication 8, dans lequel :
(i) le volume défini repose sur un fonctionnement du transporteur pendant une période de temps désignée ; ou
(ii) dans lequel les volumes définis sont basés sur la détection d'un poids de la mangeoire (140, 340, 640, 740) ou d'un poids des aliments dans la mangeoire ; ou
(iii) dans lequel les volumes définis sont basés sur l'avancement de la bande transporteuse sur une distance désignée.

10. Procédé selon la revendication 8, dans lequel :
le récipient (110, 310), le réceptacle (120, 320) et l'unité de commande (170, 170', 170", 470, 570, 670A, 670B, 670C, 770) font partie d'un système d'alimentation pour animaux ;
le récipient est dimensionné pour contenir des aliments secs pour animaux domestiques sous la forme de granules, le récipient présentant une extrémité supérieure (112) et une extrémité inférieure (114), dans lequel l'extrémité inférieure présente une ouverture (116) à travers laquelle sont acheminés les aliments pour animaux domestiques ;
la bande transporteuse comprend un moteur d'entraînement (130) destiné à occasionner un cyclage de la bande transporteuse ;
le microprocesseur (160) comprend un émetteur-récepteur (164) destiné à recevoir des signaux sans fil ; et
l'unité de commande présente un émetteur-récepteur qui communique avec l'émetteur-récepteur (164) associé au microprocesseur, en utilisant des signaux sans fil.

11. Procédé selon la revendication 10, dans lequel :
des parois (237) adjacentes à la bande transporteuse (230) prennent en charge les aliments pour animaux domestiques entre les tasseaux (238) ;
l'unité de commande est un ordinateur universel (670C) connecté à un site web ; et
l'unité de commande communique avec l'émetteur-récepteur (164) associé au microprocesseur par l'intermédiaire d'un réseau de télécommunication, en réponse à des instructions entrées par l'utilisateur à travers le site web.

12. Procédé selon la revendication 10, dans lequel :
l'unité de commande est un assistant numérique personnel (670A, 670B) présentant un émetteur-récepteur ; et
l'émetteur-récepteur dans l'assistant numérique personnel communique avec l'émetteur-récepteur (164) associé au microprocesseur par l'intermédiaire d'un réseau de télécommunication, ou par l'intermédiaire de signaux sans fil selon le protocole RF, Zigbee, Wi-Fi ou Bluetooth.

13. Procédé selon la revendication 10, dans lequel :
le récipient (110, 310) réside sur, et est au moins partiellement pris en charge par, le logement (105), dans lequel la goulotte de logement (239) est solidaire du logement et définit une sortie à travers laquelle les aliments pour animaux domestiques tombent de la seconde extrémité supérieure (233) de la bande transporteuse (230) dans la mangeoire (140, 340, 640, 740) ; et
un agitateur (220) résidant à proximité de l'extrémité inférieure de la bande transporteuse et s'étendant vers le haut dans l'ouverture (116) du récipient, l'agitateur effectuant un mouvement de va-et-vient en réponse à un mouvement du moteur d'entraînement (130), et optionnellement dans lequel, en outre, le moteur d'entraînement comprend un moteur d'entraînement électrique qui, lorsqu'il est actionné, fait tourner un arbre d'entraînement (134), qui, à son tour, communique un mouvement à la bande transporteuse.

14. Procédé selon la revendication 12, dans lequel, en utilisant l'unité de commande (170, 170', 170", 470, 570, 670A, 670B, 670C, 770), un utilisateur peut choisir parmi l'une quelconque des méthodes d'alimentation suivantes :
(a) une alimentation avec commande de dosage, dans laquelle une quantité désignée d'aliments est distribuée dans la mangeoire (140, 340, 640, 740) une ou plusieurs fois par jour, ladite quantité désignée étant inférieure à un volume total de la mangeoire ; et
(b) une alimentation à choix libre, dans laquelle une portion d'aliments définie est toujours disponible pour que l'animal domestique ait la liberté de manger à sa guise.

15. Procédé selon la revendication 14, dans lequel, en utilisant l'unité de commande (170, 170', 170", 470, 570, 670A, 670B, 670C, 770), un utilisateur peut en outre commander la durée pendant laquelle les aliments sont distribués à partir de la bande transporteuse (230) selon la méthode (a) d'alimentation avec commande de dosage, ce qui permet d'obtenir ainsi une méthode d'alimentation lente ; ou
dans lequel le procédé comprend en outre l'étape ci-dessous consistant à :
équiper au moins un animal d'un dispositif de communication (695) conçu pour envoyer un signal permettant au système d'alimentation pour animaux de détecter la présence de l'animal équipé à proximité immédiate de la mangeoire ; ou
dans lequel le procédé comprend en outre les étapes ci-dessous consistant à :
équiper au moins un animal d'un dispositif de communication (695) conçu pour envoyer un signal permettant au système d'alimentation pour animaux de détecter la présence de l'animal à proximité immédiate de la mangeoire ; et
recevoir un message textuel sur un écran d'affichage (775) associé à l'unité de commande utilisateur en réponse à un capteur en communication électrique avec le microprocesseur indiquant (i) qu'un animal domestique s'est approché de la mangeoire, (ii) que le récipient est vide à au moins 50 %, (iii) qu'un animal domestique a accès à la mangeoire, (iv) qu'un animal domestique n'a pas accès à la mangeoire, ou (v) que la mangeoire est sensiblement vide.
